# EUROPÄISCHE PATENTSCHRIFT

(11) **EP 2 274 248 B1**
(45) Veröffentlichungstag und Bekanntmachung des Hinweises auf die Patenterteilung: **03.10.2018**
(21) Anmeldenummer: 09737884.8
(22) Anmeldetag: 29.04.2009
(51) Int. Cl.: C03C 4/12, C03C 14/00, C03C 3/068, C03C 3/091, C03C 3/093, C03C 3/095, C03C 3/16, C09K 11/02, C09K 11/77

(54) **KONVERSIONSMATERIAL INSBESONDERE FÜR EINE, EINE HALBLEITERLICHTQUELLE UMFASSENDE WEISSE ODER FARBIGE LICHTQUELLE, VERFAHREN ZU DESSEN HERSTELLUNG SOWIE DIESES KONVERSIONSMATERIAL UMFASSENDE LICHTQUELLE**
CONVERSION MATERIAL, ESPECIALLY FOR A WHITE OR COLORED LIGHT SOURCE COMPRISING A SEMICONDUCTOR LIGHT SOURCE, METHOD FOR PRODUCING THE SAME AND LIGHT SOURCE COMPRISING SAID CONVERSION MATERIAL
MATÉRIAU DE CONVERSION NOTAMMENT DESTINÉ À UNE SOURCE DE LUMIÈRE BLANCHE OU COULEUR COMPORTANT UNE SOURCE DE LUMIÈRE À SEMI-CONDUCTEURS, PROCÉDÉ DE FABRICATION ET SOURCE DE LUMIÈRE COMPORTANT CE MATÉRIAU DE CONVERSION

(30) Priorität: 29.04.2008 DE 102008021438
(43) Veröffentlichungstag der Anmeldung: 19.01.2011
(73) Patentinhaber: Schott AG, 55122 Mainz (DE)
(72) Erfinder: LIEBALD, Rainer, 64569 Nauheim (DE); STOLZ, Claudia, 55218 Ingelheim (DE); BRIX, Peter, 55116 Mainz (DE); RITTER, Simone Monika, 55131 Mainz (DE); NASS, Peter, 55120 Mainz (DE); GÖDEKE, Dieter, 84028 Landshut (DE); PICHLER-WILHELM, Sabine, 84028 Landshut (DE); WIMMER, Sabrina, 84032 Altdorf (DE)
(74) Vertreter: Blumbach · Zinngrebe Patent- und Rechtsanwälte
(86) Internationale Anmeldenummer: PCT/EP2009/003111
(87) Internationale Veröffentlichungsnummer: WO 2009/132840

(56) Entgegenhaltungen:
- DE-A1-102005 023 134
- DE-A1-102006 027 307
- GB-A- 2 099 207
- US-A1- 2003 227 249
- US-A1- 2004 023 787
- US-A1- 2008 035 887
- DATABASE WPI Week 200380 Thomson Scientific, London, GB; AN 2003-857341 XP002539822 -& JP 2003 258308 A (NIPPON ELECTRIC GLASS CO) 12. September 2003 (2003-09-12)
- H.-J. ILLIG: "ABC Glas" 1991, DEUTSCHER VERLAG FÜR GRUNDSTOFFINDUSTRIE , LEIPZIG , XP002539821 Seite 167 - Seite 168
- EHRT D: "Structure, properties and applications of borate glasses" GLASS TECHNOLOGY DECEMBER 2000 SOC OF GLASS TECHNOLOGY, Bd. 41, Nr. 6, Dezember 2000 (2000-12), Seiten 182-185, XP000977663
- HAMILTON E H ET AL: "Properties of zinc borosilicate glasses" JOURNAL OF RESEARCH OF THE NATIONAL BUREAU OF STANDARDS, Bd. 62, Nr. 2, Februar 1959 (1959-02), Seiten 59-62, XP008109473
- M. B. VOLF: "Technical Approach to Glass" 1990, ELSEVIER , XP002540496 Tabelle 15-9 Seite 301
- DATABASE WPI Week 200749 Thomson Scientific, London, GB; AN 2007-502344 XP002539823 -& JP 2007 123410 A (ASAHI GLASS CO LTD) 17. Mai 2007 (2007-05-17) in der Anmeldung erwähnt
- DATABASE WPI Week 199826 Thomson Scientific, London, GB; AN 1998-291897 XP002539824 -& JP 10 101371 A (NAIGAI CERAMICS KK) 21. April 1998 (1998-04-21)
- DATABASE WPI Week 200617 Thomson Scientific, London, GB; AN 2006-161232 XP002539825 -& JP 2006 052345 A (ROHM CO LTD) 23. Februar 2006 (2006-02-23)
- E. A. OLEVSKY: "Theory of sintering: from discrete to continuum" MATERIALS SCIENCE AND ENGINEERING, Bd. 23, 1998, Seiten 41-100, XP004148692
- Heinz G. Pfaender: "Schott Glaslexikon", 1997, XP007919903, ISBN: 3-478-05240-8 pages 26-27, * page 27 *
- Schott: "Optisches Glas, Beschreibung der Eigenschaften 2009", 2009, XP007919902, pages 13, 47-48, * the whole document *
- "Fixpunkte bei der glasigen Erstarrung einer Schmelze" In: Werner Vogel: "Glaschemie", 1992, XP007920388, ISBN: 3-540-55171-9 pages 36-38, * figure 2.9 *

## Beschreibung

Die Erfindung betrifft ein Konversionsmaterial insbesondere für eine, eine Halbleiterlichtquelle umfassende weiße oder farbige Lichtquelle sowie eine dieses Konversionsmaterial umfassende Lichtquelle.

Mit der Erfindung soll insbesondere ein Konversionsmaterial zur zumindest teilweisen Umwandlung der Strahlung einer Primärlichtquelle, bei welcher die Primärstrahlung beispielsweise blaues Licht umfassen kann, in Licht anderer Wellenlängen, welche nachfolgend auch als Sekundärstrahlung bezeichnet wird und beispielsweise gelbes Licht umfassen kann, bereitgestellt werden, wobei durch die Überlagerung der Primär- und der gegebenenfalls breitbandigen Sekundärstrahlung farbiges oder weißes Licht erzeugbar wird.

Durch die passende Auswahl des Konversionsmaterials und die Abstimmung des Gesamtsystems, können auf diesem Wege Lichtfarben oder Farborte dieser Lichtquelle eingestellt werden.

Zur Konversion der Strahlung der Primärlichtquelle in Licht anderer Wellenlängen werden Leuchtstoffe, die herkömmlich auch als "Phosphore" bezeichnet werden, eingesetzt. Diese Leuchtstoffe sind in der Regel in eine Matrix eingebettet, welche vom Primärlicht durchstrahlt wird. Das Ausmaß der Konversion ist durch die Dicke des Konversionsmaterials, die Art und Konzentrationen der Dotierung oder Dotierungen mit Leuchtstoffen einstellbar.

Der Farbort des emittierten Lichtes kann dabei durch das Ausmaß der Konversion der Primärstrahlung in gewissen Grenzen eingestellt werden, so dass im Falle der Erzeugung weißen Lichtes sowohl warme als auch kalte Weißpunkte der resultierenden Gesamtstrahlung ermöglicht werden.

Die Erzeugung beispielsweise weißen Lichtes durch Überlagerung blauen Lichtes, welches von einer Primärlichtquelle ausgesendet wird, und gelben Lichtes, welches durch Konversion des blauen Lichtes der Primärlichtquelle erzeugt wird, ist seit geraumer Zeit bekannt.

Die derzeit etablierte technische Lösung basiert auf Phosphoren, welche gebunden in einer Polymermatrix, die meist aus Epoxydharzen oder Silikonen besteht, vorliegen.

Nachteilig hierin ist bei diesen Ausführungsformen insbesondere die Empfindlichkeit der Polymere gegenüber Umgebungsbedingungen, wie Feuchte, Strahlung, insbesondere kurzer Wellenlängen (UV), und gegenüber erhöhten Temperaturen von beispielsweise mehr als 120°C. Diese führen, einzeln oder in Kombination auftretend, zur Verschlechterung oder Alterung der teilweise ohnehin nicht optimalen optischen Eigenschaften der Polymere. Aufgrund dann einsetzender Quellung, Trübung, Färbung (Yellowing, Browning) oder gar Zersetzung der Polymere wird die Leistung und Lebensdauer der diese verwendenden lichttechnischen Systeme stark beeinträchtigt.

Mit steigender Leistungsfähigkeit, insbesondere Lichtausbeute, der Halbleiter- Lichtquellen auf LED- oder Laserdioden(LD)-Basis kommt der Temperaturbeständigkeit zunehmende Bedeutung zu, da die Steigerung der Leistung dieser Lichtquellen u.a. durch Halbleitersysteme mit höheren zulässigen Leistungsdichten und höheren Strömen erreicht wird, wodurch das Gesamtsystem nicht nur höherer Strahlungsleistung sondern auch höherer Temperaturbelastung ausgesetzt wird.

Das derzeit bereits übliche Temperaturniveau liegt um und deutlich über 150°C, in einigen Fällen bereits über 180°C und folgt einem klaren Trend zu Temperaturen von über 200°C. Im langfristigen Einsatz von einigen zehntausend Stunden und mehr befinden sich damit die Polymere bereits heute im Grenzbereich von deren Einsatzfähigkeit und sind als für die Lebensdauer begrenzende Größe für derartige Lichtquellen einzustufen.

In EP0936682 B9 (Nichia, "Light emitting device and display device") wird eine blaue lichtemittierende Diode (LED) auf Grundlage von GaN als Primärlichtquelle und ein gelb fluoreszierender Leuchtstoff zur Konversion auf Basis von (Y₁₋ᵣGdᵣ)₃Al₅O₁₂:Ce mit r zwischen 0 und 1 beschrieben. Als Matrix zur Einbettung des Leuchtstoffes werden transparente Materialien wie Epoxydharz, Harnstoffharz, Silikonharz oder Glas verwendet.

Hierin kommen jedoch alle vorstehend genannten Nachteile der Polymere zum Tragen. Es wird in dieser Schrift nicht auf intrinsische Nachteile bestimmter Glastypen Rücksicht genommen, wie diese beispielsweise bei Zn-Phosphaten bestimmter Zusammensetzungen auftreten, wie Reaktivität mit Leuchtstoffen, beispielsweise auch Redoxreaktionen in dieser Umgebung und Eigenfärbung, welche die Konversions- und Leistungseigenschaften der Gesamtlichtquelle negativ beeinflussen.

US2006/0113906A1 (Nichia, "Light emitting device and method of manufacturing thereof") beschreibt eine Diode mit einer Glasscheibe zur Abdeckung und zum Schutz des lichtemittierenden Chips, wobei das Glas zwingend aus B₂O₃ (20-30Gew.%) und ZnO (50-60Gew.%) und optional aus SiO₂ (0-10Gew.%) und/oder TiO₂ (0-10 Gew.%) und/oder anderen Komponenten besteht, eine Glastemperatur Tg zwischen 200°C und 700°C, bevorzugt 430°C bis 600°C aufweist und Fluoreszenzstoffe zur Lichtkonversion enthalten kann. Es wird eine Glasscheibe als Abdeckung eines Halbleiterchips, welche beabstandet zum Chip angeordnet ist, beschrieben. Ferner wird beschrieben, dass das Glas einen Leuchtstoff enthalten kann, jedoch nicht berücksichtigt wie dieses Glas mit dessen Leuchtstoff hergestellt werden kann, denn erfahrungsgemäß lassen sich beispielsweise Ce:YAG und auch andere Leuchtstoffe nicht in der Glasschmelze verarbeiten, wie es notwendig wäre, um die hier beschriebene Glasscheibe als Abdeckung zu erhalten. Es besteht bei der üblichen Temperaturbehandlung generell die Neigung zur gegenseitigen chemischen Reaktion zwischen Glas und Leuchtstoff, soweit beide Komponenten nicht explizit in diesem Punkt aufeinander abgestimmt sind. Ferner kann es in der jeweils spezifischen Ausführung des Glases mit dessen Leuchtstoff zur Eigenfärbung sowie zu dessen Entmischung kommen.

In der EP1471777A2 wird ein mit Ce aktivierter Leuchtstoff mit Granatstruktur beschrieben, wobei Terbium und Y, Lu, Sc, La, Gd oder Sm ein Hauptbestandteil des Wirtsgitters ist.

Die verwendete Vergussmasse besteht aus Polymeren mit allen bereits beschriebenen Nachteilen.

Die DE10137641A1 beschreibt eine kappenförmige Matrix zur Einbettung der Leuchtstoffe, die durch einen glasartigen Körper gebildet wird. Zwischen dem Chip, welcher das Primärlicht emittiert, und der Kappe mit den eingebetteten Leuchtstoffen befindet sich eine Ausnehmung, welche mit einem optisch transparenten Medium mit hohem Brechungsindex gefüllt ist. Diese Kappe kann aus einem Glas, das einen Leuchtstoff enthalten kann, einem fluoreszierendem Glas oder einer fluoreszierenden Glaskeramik bestehen. Es wird beschrieben, wie Leuchtstoffe grundsätzlich in Glas einbettbar sind, jedoch nicht berücksichtigt, dass bei ungeeigneten Gläsern der Leuchtstoff beim Einbettungsprozess angegriffen wird und damit seine Konversionseigenschaften zumindest teilweise oder sogar ganz verliert und das Glas durch den Prozess dessen Transmissionseigenschaften negativ verändern und somit die Effizienz der LED stark gemindert werden kann, da hier eine ausgeprägte Neigung zur Eigenfärbung besteht.

Auch in der US2008/0035887 A1 wird ein Konversionselement mit einer Glasmatrix beschrieben. Der in der Glasmatrix eingebettete Leuchtstoff wird dabei gereinigt oder beschichtet, bevor er in die Glasmatrix eingebettet wird. Dies führt zu einer verbesserten Beständigkeit des Leuchtstoffs.

Die DE102005023134 beschreibt die Verwendung eines Leuchtstoffes, welcher in eine Glasmatrix eingebettet ist. Als Glasmatrix werden zwei Glasfamilien beschrieben, ein Borkronglas (mit z.B. 16 - 25% K₂O und ein Lanthankronglas (mit z.B. 5 - 25% ThO₂). Auch in dieser Veröffentlichung wird die Herstellbarkeit des Glas-Konvertersystems nicht berücksichtigt und sind die zu erwartenden negativen Einflüsse auf das Gesamtsystem, umfassend Primärlichtquelle und Konverter, weiter vorhanden. Darüber hinaus sind wegen des Borkornglases negative Wechselwirkung von Chip und Konverter aufgrund des hohen Alkaligehaltes und der Alkalimigration, insbesondere bei höheren Temperaturen in den Halbleiter hinein, stark Lebensdauer beeinträchtigend zu erwarten. Das dort erwähnte Lanthankronglas zeichnet sich in negativer Weise durch den Gehalt an ThO₂ aus und ist zu dem schon wegen der verwendeten Rohstoffe teuer. Dessen Umweltverträglichkeit bei Herstellung, Gebrauch und Recycling stellt ein weiteres gravierendes Problem dar.

Die US 6,642,618 B2 beschreibt die Verwendung einer Schicht aus Sol-Gel Glas, welches mit fluoreszierenden Substanzen dotiert wurde, als Konversionsmaterial. Als fluoreszierende Substanzen kommen Sulfide des Typs (Sr,Ba,Ca)Ga₂S₄:Eu²⁺ zum Einsatz. Das Glas, hergestellt auf einer Sol-Gel Route, enthält mindestens eine Komponente aus der Gruppe PbO, Ga₂O₃, Bi₂O₃, CdO, ZnO, BaO und Al₂O₃. Die Sol-Gel Route birgt wiederum Nachteile bezüglich der Variabilität eines Konverters in sich, da nur sehr dünne Schichten mit einer Dicke von weniger als 10µm in kompakter Form dargestellt werden können.

Die Darstellung kompakter Volumenkörper auf der Sol-Gel Route ist zwar prinzipiell möglich, aber aufwändig wegen langer Trocknungszeiten von mehr als 24 h, wodurch es als teuer und nicht praktikabel für viele wichtige Applikationen einzustufen ist.

Des weiteren beinhaltet das benannte Glas nach ROHS verbotene Komponenten.

Die Abkürzung RoHS (engl. Restriction of the use of certain hazardous substances in electrical and electronic equipment: "Beschränkung der Verwendung bestimmter gefährlicher Stoffe in Elektro- und Elektronikgeräten") bezeichnet zusammenfassend die EG-Richtlinie 2002/95/EG zum Verbot bestimmter Substanzen bei der Herstellung und Verarbeitung von elektrischen und elektronischen Geräten und Bauteilen, sowie die jeweilige Umsetzung in nationales Recht, welche maximal 0,01 Gewichtsprozent Cadmium, maximal je 0,1 Gewichtsprozent Blei, Quecksilber, sechswertiges Chrom, PBB und PBDE zulässt.

Diese Dicke der Sol-Gel Schichten limitiert weiterhin die Dotierbarkeit mit Leuchtstoffen, wodurch nur eine stark eingrenzte Anzahl sinnvoller Farborte, darüber hinaus mit blau-lastigem Farbeindruck, eingestellt werden kann und somit die Effizienz des Systems nach oben beschränkt ist. Blaue Farbanteile tragen aufgrund niedrigerer Augenempfindlichkeit nur gering zur gesamten Luminosität bei. Die Zusammensetzung üblicher Sol-Gel Precursoren, welche je nach Typ auch chemisch sehr aggressive Substanzen (nennenswerte Konzentrationen an mineralischen Säuren) enthalten, bergen zumindest die Möglichkeit, dass der Chip während der Herstellung geschädigt wird.

EP 1605526 A beschreibt die Verwendung von Glasscheiben mit eingebetteten Konversionsmaterialien sowie die Vereinzelung dieser Scheiben und deren Weiterverarbeitung zu Kappen. Das Matrixglas enthält mindestens eine Komponente aus der Gruppe GeO₂, TeO₂, PbO, CaO und B₂O₃. Nachteilig ist jedoch, inklusive der vorstehend benannten Probleme, der einem ROHS Verbot unterliegende Pb-Gehalt sowie der Einsatz teurer GeO₂- und toxischer TeO₂-Rohstoffe.

Die DE102006027307 A1 beschreibt Konvertermaterialien basierend auf einer Sinterglaskeramik. Der Sinterglaskeramik werden hierbei keine Leuchtstoffpartikel zugesetzt, sondern die Konversionszentren bilden sich während der Keramisierung des Ausgangsglases. Hierbei kann es sich beispielsweise um Granatphasen handeln.

Die Patent Abstracts of Japan, Publication number: 2007-123410 beschreiben eine lichtemittierende Diode, die mit einem hochbrechenden Glas bedeckt ist, in welchem Phosphore eingebettet sind. Das dotierte Glas wird durch gemeinsames (gleichzeitiges) Schmelzen von zerkleinerten Glasscherben und den jeweiligen Phosphoren erhalten. Das verwendete Glas enthält zwingend TeO₂ (40 - 53 Mol%), B₂O₃ (5 - 30 Mol%) und ZnO (3-20 Mol%), sowie optional Ga₂O₃, Bi₂O₃, GeO₂, Y₂O₃, La₂O₃, Gd₂O₃ (0 - 7 Mol%) und Ta₂O₅. Die Gefahr der Eigenfärbung dieses Glases aufgrund des Bi₂O₃- und TeO₂-Gehaltes einerseits, andererseits die vorstehend bereits genannten Nachteile sowie erneut der Einsatz teurer und teilweise toxischer Rohstoffe (TeO₂ Ga₂O₃, Bi₂O₃, GeO₂) mit teilweise hohen Anteilen sind für dessen kommerzielle Verwendung äußerst abträglich. Ferner ist dessen kommerzielle Anwendbarkeit aufgrund erhöhter Entmischungs-/ Kristallisationsanfälligkeit in speziellen Ausprägungen in Frage gestellt.

Die Patent Abstracts of Japan, Publication number: 2007-016171 beschreiben ein Wellenlängenkonversionsmaterial aus Oxynitrid-Glas mit einem Erweichungspunkt von 700°C oder mehr, und darin verteilten Fluoreszenzmaterialien auf Basis von Nitriden, wobei die Leuchtstoffe bereits in der Schmelze zugegeben werden bzw. auch das Glas selbst aus Leuchtstoff tauglich herstellbar ist.
Die Nachteile wie Reaktivität und Eigenfarbe sind auch hier vorhanden. Erhöhte Reaktivität untereinander ist insbesondere in einem erhöhten Temperaturregime bei Temperaturen von mehr als 600°C zu erwarten. Zudem ist die Herstellung von Oxynitrid-Gläsern im Vergleich zur Herstellung von z.B. Silikat-Gläsern aufwändig und teuer.

In der WO2007145047A1 ist ein Wellenlängenkonversionsmaterial aus einem niedrigschmelzenden Glas mit den Hauptkomponenten SnO, B₂O₃ und P₂O₅ und darin verteilten Fluoreszenzmaterialien auf Basis von Nitriden offenbart. Das hier beschrieben Glas bzw. die Glasfamilie neigt insb. aufgrund des P₂O₅-Gehaltes zur Färbung und ist damit mindestens in bestimmten Zusammensetzungen ungeeignet, einen effektiven Wellenlängenkonverter darzustellen.

EP1880983 beschreibt ein Kompositmaterial, welches durch Mischen und Backen eines Glaspulvers, vermischt mit einem Leuchtstoff, erhalten wird. Der so hergestellte Konverter erreicht eine Energie-Konversions-Effizienz von mindestens 10%. Das beschriebene Glas enthält - wie viele bereits vorher benannte - hohe Anteile an beispielsweise ZnO, B₂O₃ und Alkalien, mit den damit einhergehenden Nachteilen.

Diese führen insbesondere im beschriebenen Zusammensetzungsbereich und dem beschriebenen Herstellverfahren das Potential der Eigenfarbe mit sich. Damit wird die Effizienz des Gesamtsystems verringert und kann, wenn überhaupt, nur wenig über der beanspruchten Grenze von 10% liegen.

JP2003258308 A lehrt ein Konversionsmaterial, hergestellt aus einem Glaspulver (La₂PO₃-freies Borosilikat mit Zinkanteil, Korngröße < 150 µm, d50 > 2 µm z.B. 20 µm) und einem Leuchtstoff durch Pressen mit anschließendem Sintern. Das Konversionsmaterial wandelt blaues Primärlicht einer LED (Wellenlänge etwa 440-490 nm) in gelbes Licht um, welches vereint mit nicht umgewandeltem blauen Licht letztendlich weißes Licht ergibt.

Zusammenfassend beschreibt der Stand der Technik Lichtquellen basierend auf LED oder Laserdiodenlichtquellen mit Wellenlängen-Konvertern bestehend aus Leuchtstoffen und Matrixmaterialien, bei welchen insbesondere die Matrixmaterialien intrinsische Schwächen und Nachteile aufweisen. Im Falle der Polymere sind dies insbesondere deren Instabilität gegenüber thermischer Belastung und Umwelteinflüssen sowie deren relativ niedrige Brechzahl.

Im Falle der benannten anorganischen Matrixmaterialien umfassen diese Nachteile:
- deren chem. Reaktivität mit den einzubettenden Leuchtstoffen, die insbesondere im Laufe des Herstellungsprozesses des Konverters bei erhöhten Temperaturen (glasige Matrices) bzw. hohen Temperaturen (keramische Matrices oder schmelzflüssiges Glas) die Fluoreszenzeigenschaften des Phosphors negativ beeinträchtigen oder zerstören (auch bei Phosphoren, deren thermische Stabilität über den notwendigen Prozesstemperaturen liegt, wie beispielsweise Ce:YAG)
- Die Beeinträchtigung des Leuchtstoffes bei der Herstellung des Konverters
- Die Toxizität einzelner Komponenten der Matrix mit Auswirkungen auf deren Herstellbarkeit
- Spezielle und damit teure Synthesen, die weiterhin spezieller Herstellverfahren bedürfen, welche nur kleine Volumina darstellen lassen und damit wiederum kostentreibend wirken
- Die teure Zusammensetzung des Matrixglases
- Die, mindestens potentielle Gefahr, der Eigenfarbe der beschriebenen Matrixmaterialien, Gläser sowie Glasfamilien nach deren Temperung, Niederschmelzung oder Wiedererschmelzen aus Pulvern.

Diese führen einzeln oder in Summe zu ineffizienten Konvertern mit geringerer Lichtausbeute oder sogar zu funktionslosen Exemplaren, welches durch eigene Experimente der Erfinder für einige der vorerwähnten Gläser und Glasfamilien gezeigt werden konnte.

Mit der Erfindung soll ein anorganisches WellenlängenKonversionsmaterial mit einem Matrixglas mit mindestens einem eingebetteten Leuchtstoff zur Erzeugung weißen oder farbigen Lichtes durch additive Farbmischung des Lichtes unterschiedlicher Wellenlängen bzw. Spektren unterschiedlicher Ausprägung bezüglich deren spektralen Verlaufes bereit gestellt werden.

Diese Aufgabe wird gelöst mit einem Konversionsmaterial mit den Merkmalen des Anspruchs 1, welches vorzugsweise gemäß einem Verfahren mit den Merkmalen des Verfahrens 22 hergestellt ist. Vorteilhafte Ausführungsformen sind Gegenstand der jeweiligen Unteransprüche.

Dieses Konversionsmaterial umfasst ein Glas, welches im Folgenden auch als Matrix oder Matrixglas bezeichnet wird. Das Ausgangsmaterial für das Matrixglas liegt in Form eines Bulk-/Volumenmaterials oder als loses Pulver daraus vor.

Das Bulkmaterial oder Volumenmaterial beschreibt das Matrixglas nach seiner Herstellung, d.h. nach dem Erschmelzen, und vor dem Ausbilden einer Fritte und/oder vor dem Aufmahlen des Glases zu einem Pulver. Das Bulkmaterial ist somit ein "kompakter" oder erschmolzener Glaskörper. Es ist ein Vollmaterial oder ein Körper mit gleichmäßiger Dichte. Das Bulkmaterial kann zum Beispiel als eine Glasscheibe oder ein Glasblock vorliegen.

Im Detail liegt im Rahmen der vorliegenden Erfindung ein Konversionsmaterial, das ein Matrixglas umfasst,
das als Bulkmaterial bei einer Dicke d von etwa 1 mm im Wellenlängenbereich von 350 bis 800 nm und in dem Bereich, in welchem die Primärlichtquelle Licht emittiert, eine Reintransmission τᵢ von mehr als 80% aufweist, und
wobei das Matrixglas als Sinterkörper aus einem Pulver mit einer Korngrößenverteilung von Korngrößen d10 >=0,7µm, d50>= 3µm und d90 <= 150µm aufgebaut ist. Das Konversionsmaterial umfasst in seinem gebrauchsfertigen Zustand oder in seinem Verwendungszustand noch wenigstens einen Leuchtstoff. Der zumindest eine Leuchtstoff ist dann in das Matrixglas eingebettet oder eingearbeitet.

Der Konverter ist insbesondere geeignet für eine, eine Halbleiterlichtquelle als Primärlichtquelle umfassende weiße oder farbige Lichtquelle.

Der Sinterkörper wird auch als Sinterglaskörper bezeichnet. Dieser wird durch das zu Pulver gemahlene Matrixglas, das mittels Sintern "verbunden" wird, gebildet. Das Matrixglas wird gemahlen. Das Pulver wird in eine Form gebracht. Durch ein Sintern des Pulvers wird der Sinterkörper gebildet.

Die erfindungsgemäße Korngrößenverteilung d10 >= 0,7µm, d50 >= 3µm und d90 <= 150µm wird an dem Pulver bestimmt.

Vorzugsweise ist der Sinterkörper derart gesintert und/oder die Verteilung der Korngrößen derart gewählt, dass für den Sinterkörper, ohne einen eingebetteten Leuchtstoff, die Summe aus Transmission und Remission im Spektralbereich von 350 nm bis 800 nm und in dem Spektralbereich, in welchem die Primärlichtquelle Licht emittiert, mindestens mehr als 80%, bevorzugt mehr als 85%, am meisten bevorzugt mehr als 90% beträgt.

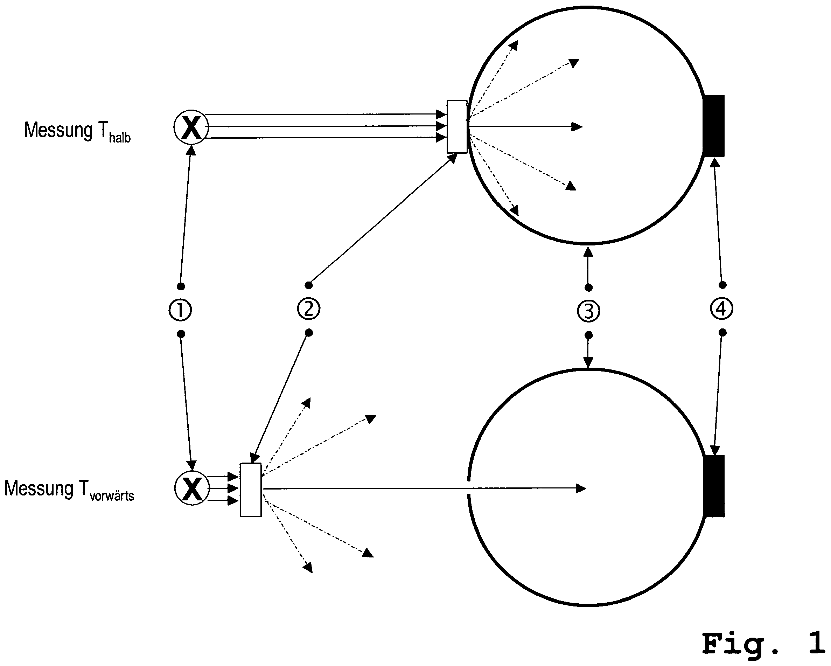

Insbesondere ist der Sinterkörper derart gesintert und/oder die Verteilung der Korngrößen derart gewählt, so dass in einem Spektralbereich von 350 bis 800 nm ein Quotient von T_{halb}:T_{vorwärts} zwischen 1 < T_{halb}:T_{vorwärts} <= 70 liegt. Das Verhältnis ermöglicht eine Charakterisierung des erzeugten Sinterkörpers hinsichtlich seines Transmission- und/oder Streuverhaltens. Für weitere Details und zur Definition der Parameter T_{halb} und T_{vorwärts} sei auf die nachfolgenden Ausführungen zur Figur 1 verwiesen.

Im Bereich der Erfindung liegt auch ein Konversionsmaterial für eine, eine Halbleiterlichtquelle als Primärlichtquelle umfassende weiße oder farbige Lichtquelle, umfassend
ein Matrixglas, welches als reiner Glaskörper bei einer Dicke d von etwa 1 mm im Wellenlängenbereich von 350 bis 800 nm und in dem Bereich, in dem die Primärlichtquelle Licht emittiert, eine Reintransmission τᵢ von mehr als 80% aufweist,
sowie die Summe aus Transmission und Remission des, aus Pulver mit einer Korngrößenverteilung von Korngrößen d10 >=0,7µm, d50>= 3pm und d90 <= 150pm gemahlenen Glases, daraus in Form gebrachten Grünkörpers und anschliessendem Sintern, hergestellten Sinterglaskörper ohne Leuchtstoff,
im Spektralbereich von 350 nm bis 800 nm und in dem Spektralbereich, in welchem die Primärlichtquelle Licht emittiert, mindestens mehr als 80%,
sowie der Quotient von Thalb:Tvorwärts diese Sinterkörpers zwischen 1 < Thalb:Tvorwärts <= 70 im Spektralbereich von 350 bis 800 nm beträgt.
Der Grünkörper ist ein aus Pulver hergestellter Körper, der einem Sinterprozess zugeführt wird.

Die Erfinder haben erkannt, dass die Eigenschaften des Matrixglases als solches und insbesondere des daraus gebildeten Glaspulvers, das nach dem Sintern die Matrix für die eingebetteten Leuchtstoffe bildet, einen entscheidenden Einfluss auf die optischen Eigenschaften des Konverters ausüben.

Die Erfinder haben zum einen erkannt, dass die Größe und Verteilung der Korngröße des Matrixglases einen wesentlichen Einfluss auf die optischen Eigenschaften des gesinterten Matrixglases (undotiert) und des Konverterelementes (dotiert mit Phosphor) ausüben. Zum anderen haben die Erfinder auch erkannt, dass die gewählte Größe der Körner zu größeren Durchmessern hin einen vorteilhaften Einfluss auf die optischen Eigenschaften des gesinterten Matrixglases (undotiert) und des Konverterelementes (dotiert mit Phosphor) ausüben. Dies steht im Gegensatz zum Stand der Technik, wonach vielmehr versucht wird, ein Pulver mit einer kleinen Korngröße, beispielsweise mit einem mittleren Durchmessers d50 von kleiner als etwa 2,5 µm, bereitzustellen.

Die herrschende Meinung geht dabei von der Annahme aus, dass zu grobe Körnungen zu erhöhter Porosität im einem gesinterten Körper führen, so dass diese eine Wirkung als massive, nicht kontrollierbare Streuzentren hätten und damit ein nicht kontrolliert einstellbares optisches Regime des Konvertelementes zu erwarten wäre. Die Effizienz eines derart produzierten Körpers oder Konverterelements würde auf ein unbefriedigendes Maß sinken.

Die Erfinder haben dagegen festgestellt, dass mittels der erfindungsgemäßem Korngrößenverteilung das optisch relevante Regime aus Transmission, Remission, Absorption und/oder Streuung gezielt eingestellt oder modifiziert werden kann. Zudem haben sie festgestellt, dass die großen bzw. groben Körnungen im Ergebnis zu nahezu transparenten Sinterkörpern führen und darüber hinaus leichter sinterbar sind.

Als transparente Matrix kommt bei vorliegender Erfindung in einer ersten Gruppe bevorzugter Ausführungsbeispiele ein Glas zum Einsatz, dessen thermischer Ausdehnungskoeffizient zwischen 3 und 11·10⁻⁶K⁻¹ liegt und dessen Brechwert n_{d} Werte oberhalb von 1,6 oder gleich 1,6 annimmt.

Das Matrixglas ist weiter dadurch gekennzeichnet, dass die verwendeten Phosphore (zum Beispiel Ce:YAG) bei der Einschmelzung/Temperung/Sinterung nicht bzw. nicht in nennenswertem Ausmaß angegriffen oder aufgelöst werden, wodurch deren Funktionalität zumindest eingeschränkt oder ganz verloren ginge.

Der nach Einschmelzung/Temperung/Sinterung erhaltene Körper soll im folgenden auch Sinterkörper oder auch als Konverter bzw. Konversionsmaterial bezeichnet werden.

Die Zusammensetzung des Matrixglases ist frei von toxischen und/oder umwelt- bzw. gesundheits-bedenklichen Komponenten.

Im Gebrauchszustand des Konversionsmaterial umfasst das Konversionsmaterial zumindest einen Leuchtstoff mit einer Körnung mit einem mittleren Durchmesser d50 zwischen 1 µm und 50 µm, besonders bevorzugt zwischen 1 µm und 20 µm, am meisten bevorzugt zwischen 1 µm und 15 µm.

In einer alternativen oder ergänzenden Ausführungsform der Erfindung umfasst das Konversionsmaterial zumindest einen Leuchtstoff mit einer Körnung mit einem mittleren Durchmesser d50 kleiner 300 nm, besonders bevorzugt kleiner 100 nm und am meisten bevorzugt kleiner 40nm.

Durch die Zugabe des Leuchstoffs wird die Primärstrahlung absorbiert. Die erzeugte Sekundärstrahlung wie auch die Primärstrahlung wird zudem gestreut. Um eine ausreichende Absorption und damit Konversion der Primärstrahlung zu gewährleisten, darf die Streuung der Primärstrahlung nicht zu groß sein. Dies wird erreicht entweder durch vergleichsweise große Leuchtstoffpartikel (d50 zwischen 1µm und 50 µm, besonders bevorzugt zwischen 1µm und 20µm und am meisten bevorzugt zwischen 1µm und 15µm) oder eben durch nanoskalige Partikel (d50 kleiner 300nm, besonders bevorzugt kleiner 100nm und am meisten bevorzugt kleiner 40nm.). Falls die Leuchtstoffpartikel zu groß werden, ist deren Verarbeitbarkeit im Sinterprozess erschwert. Zudem wird die praktikable Partikelgröße durch die Dicke des Konversionselementes (typisch < 250µm) nach oben begrenzt.

Im Bereich der Erfindung liegt auch ein Verfahren zur Herstellung des Konversionsmaterials. Die Herstellung erfolgt vorzugsweise über Schmelzen der Glasrohstoffe, Bildung einer Fritte (oder dünne Scherben) durch Ausgießen der Schmelze, beispielsweise in Wasser (oder zwischen gekühlten Walzen), Aufmahlen der Fritte zu einem Glaspulver, versetzen des Matrixglas-Pulvers mit Fluoreszenzstoffen (Phosphoren) und thermischer Behandlung, beispielsweise Sinterung, zu einem neuen Glaskörper/Glasmatrix-Verbundwerkstoff, dem Konverter. Das Aufmahlen des Matrixglases zu einem Pulver erfolgt derart, dass das Pulver eine Korngrößenverteilung von Korngrößen d10 >= 0,7 µm, d50> = 3µm und d90 <= 150µm aufweist.

Das Verfahren ist insbesondere geeignet zur Herstellung eines erfindungsgemäßen Konversionsmaterials.

In einer Ausführungsform erfolgt das Sintern in einer spezifischen Atmosphäre. Die spezifische Atmosphäre wird vorzugsweise durch Stickstoff, Formiergas und/oder Argon oder als ein Unterdruck, beispielsweise als ein Vakuum von bis zu 10e-6 mbar, bereitgestellt. Diese Art der Prozessführung schützt die Leuchtstoffe vor äußeren Einflüssen, wie zum Beispiel vor Oxidation oder Reduktion. Zudem wird dadurch die Einbettung in bestimmte Gläser erst möglich gemacht. Ferner können dadurch auch bestimmte Redox-Zustände in dem Matrixglas und/oder dem Leuchtstoff eingestellt werden. Durch das Sintern unter Unterdruck können die Anzahl und/oder die Größe möglicher Poren minimiert werden oder eingestellt werden. In einer Alternative oder Ergänzung kann dies auch durch Drucksintern (uniaxial oder isostatisch) erreicht werden, wobei die Einstellung spezifischer Atmosphären entsprechend günstiger Parameter für die zu prozessierende Materialkombination einzuhalten ist. Das erfolgt bei einem Druck in einem Bereich von 100 bis 3000 bar, vorzugsweise von 500 bis 2500 bar, meist bevorzugt von 500 bis 1500 bar. Diese Temperaturbehandlung erfolgen weiterhin in einem Temperaturbereich bis ca. 150 K über der Erweichungstemperatur (EW) des Glases oder so dass die Viskosität des eingesetzten Glases im Bereich zwischen h = 10¹⁴ dPas und h = 10⁶ dPas, bevorzugt zwischen h = 10^{13.5} dPas und h=10⁷ dPas, besonders bevorzugt zwischen h = 10¹⁰ dPas und h=10⁷ dPas liegt. Das Tempern kann dabei mit einer Haltezeit in einem Bereich von 0 bis 300 min, bevorzugt von 15 bis 300 min, besonders bevorzugt von 100 bis 180 min durchgeführt werden.

Die Leuchtstoffe, beispielsweise Ce:YAG, werden mit einer Körnung mit einem mittleren Korngrößendurchmesser d50 zwischen 1 µm und 50 µm, besonders bevorzugt zwischen 1 µm und 20 µm, am meisten bevorzugt zwischen 1 µm und 15 µm verwendet. In einer Alternative oder Ergänzung wird der Leuchtstoff mit einer Körnung mit einem mittleren Korngrößendurchmesser d50 kleiner 300 nm, besonders bevorzugt kleiner 100 nm und am meisten bevorzugt kleiner 40nm verwendet.

In einer weiteren Ausgestaltung des Verfahrens werden die Leuchtstoffe einer, vorzugsweise thermischen, Vorbehandlung unterzogen. Die Temperaturen sind entsprechend der Art der Leuchtstoffe zu wählen. Vorzugsweise erfolgt die Vorbehandlung in einer spezifischen Atmosphäre. Diese wird insbesondere durch Stickstoff, Formiergas und/oder Argon oder als ein Unterdruck, beispielsweise als ein Vakuum von bis zu 10e-6 mbar, bereitgestellt.

In einer weiteren Ausführungsform der Erfindung wird eine Schutzschicht, bspw. zum Schutz vor chemischen Angriff des Phosphors durch das Glas und vice versa während des Sinterns oder als Barriereschicht gegen z.B. Feuchte im LED System, auf der Oberfläche oder Außenseite des Leuchtstoffs ausgebildet. Dies erfolgt vor dem Vermischen mit dem Matrixglas. Diese Schutzschicht "schirmt" den Leuchtstoff von Umgebungseinflüssen und/oder thermischen Einflüssen ab. Der Leuchtstoff wird verkapselt. Dadurch kann eine Degradation der Leuchtstoffe vermieden oder zumindest reduziert werden. Die Schutzschicht kann gegebenenfalls anorganisch sein. Sie wird beispielsweise mittels nasschemischem Methoden, Sol-Gel-Verfahren, PVD und/oder CVD ausgebildet oder abgeschieden.

Als Alternative oder Ergänzung kann auch ein fertig prozessiertes und nachbearbeitetes Konversionselement mit einer Schutzschicht, zum Beispiel nach einem der vorstehend genannten Verfahren, versehen werden. Eine mögliche Ausführungsform für eine Schutzschicht stellt eine Barriereschicht, zum Beispiel gegen Feuchtigkeit, dar.

In einer Weiterbildung des Verfahrens erfolgt nach dem Sintern noch ein weiterer temperatur- und ggf. druckgestützte (uniaxial oder isostatisch) Behandlung des Sinterkörpers. Dadurch wird das oben bereits beschriebene optische Regime des Konversionsmaterials oder des undotierten gesinterten Matrixglases weiter optimal eingestellt, sowie ein festerer Verbund erzielt und/oder mögliche Spannungen entfernt.

In einer Ausführungsform ist das genannte weitere Tempern ein zweites Sintern. Das weitere Tempern wird vorzugsweise bei einem Druck in einem Bereich von 250 bis 2500 bar, vorzugsweise von 500 bis 1500 bar durchgeführt. Ferner wird das weitere Tempern bei einer Temperatur durchgeführt, so dass die Viskosität des eingesetzten Glases im Bereich zwischen h = 10¹⁴ dPas und h = 10⁶ dPas, bevorzugt zwischen h = 10^{13.5} dPas und h=10⁷ dPas, besonders bevorzugt zwischen h = 10¹⁰ dPas und h=10⁷ dPas liegt. Das weitere Tempern wird dabei mit einer Haltezeit in einem Bereich von 30 bis 600 min, bevorzugt von 60 bis 300 min, besonders bevorzugt von 100 bis 180 min durchgeführt.

Die Glasmatrix ist weiterhin dadurch gekennzeichnet, dass diese schon als reiner, kompakter, erschmolzener Glaskörper bspw. eine Glasscheibe (oben auch als Bulkmaterial bezeichnet) aus obigen Prozess keine Eigenfarbe hat und somit sowohl Primärlicht als auch Sekundärlicht in idealer Weise unverändert, dies bedeutet nicht geschwächt oder durch Absorptionen spektral verändert, für die Farbmischung bereitgestellt werden.

Im allgemeinen wird somit die Konversion Lichtes einer Wellenlänge w₁ bzw. eines spektralen Wellenlängenbereiches w₁ in Licht einer Wellenlänge w₂ bzw. eines spektralen Wellenlängenbereiches w₂ bzw. bei Verwendung von n Leuchtstoffen in Licht der Wellenlänge wₙ bzw. eines spektralen Wellenlängenbereiches wₙ, um in der Summe Licht mit der prinzipiellen spektralen Verteilung z₁* w₁ + z₂* w₂ + ... + zₙ* wₙ zu erhalten, wobei der Faktor z die Anteile und Farbstärke der zugehörigen Wellenlängen oder Wellenlängenbereiche angibt, welche an der Farbmischung beteiligt sind, berücksichtigt.

Auf Basis einer Primärlichtquelle, beispielsweise einer LED (lichtemittierende Diode)oder LD (Laserdiode), deren Spektrum mindestens teilweise Licht entsprechend der Anregungsspektren der Leuchtstoffe emittiert, führt dies zur Emission von Licht anderer Wellenlängen. Die eingesetzte Lichtquelle kann, muss allerdings nicht, mit deren eigenem Licht, welches teilweise nicht in andere Wellenlängen konvertiert wurde, zur Mischung beitragen.

Somit ist es vorteilhaft, auch ein anorganisches Matrixmaterial/Matrixglas bereitzustellen, welches
- Thermisch, chemisch und gegenüber Umwelteinflüssen beständig ist
- Keine umwelt- und/oder gesundheitsbedenklichen Komponenten enthält
- Ohne aufwändige Methoden in Volumen und damit kostengünstig darstellbar ist
- Sich chemisch inert gegenüber den einzubettenden Leuchtstoffen verhält (und vice versa)
- In der Ausbildung als Matrix für Konversionsmaterial
   (1) ohne Leuchtstoffe im wesentlichen keine Eigenfarbe aufweist und
   (2) mit Leuchtstoffen, insbesondere für die erfindungsgemäßen Korngrößenverteilungen, eine niedrige Remission (Rückstreuung) im Spektralbereich von deren Absorptionsbanden besitzt. Im einzelnen:
      ∘ dass das Matrixglas als Bulkmaterial/Glas eine hohe Reintransmission τᵢ > 80% bei einer durchleuchteten Dicke des Matrixglases d = 1 mm im Wesentlichen ohne Absorptionsbanden im Wellenlängenbereich von 350 bis 800 nm besitzt und
      ∘ dass die Summe aus Transmission und Remission das Matrixglases allein (d.h. undotiert) gesintert im Spektralbereich bevorzugt von 350 nm bis 800 nm (inklusive dem Spektralbereich der Primärlichtquelle oder der Primärlichtquellen) mindestens >80%, bevorzugt >85%, meist bevorzugt >90% beträgt
      ∘ und/oder der sich über diese Spektralbereiche einstellende maximale und minimale Betrag der Differenz von Remission und Transmission um nicht mehr als 40% bevorzugt um nicht mehr als 25% sowie am meisten bevorzugt um nicht mehr als 15% unterscheidet,
      ∘ und/oder dass die Remission des mit Leuchtstoffen dotierten Matrixglases im gesinterten Zustand im Spektralbereich der Primärlichtquelle <30%, bevorzugt < 25%, meist bevorzugt <15% beträgt, und
      ∘ und/oder dass die Summe aus Transmission und Remission des mit Leuchtstoffen dotierten Matrixglases im gesinterten Zustand im Spektralbereich von 350 nm bis 800 nm, exklusive des Spektralbereichs der Primärlichtquellen, mindestens >80%, bevorzugt >85%, meist bevorzugt >90% beträgt
      ∘ und/oder der sich über diese Spektralbereiche einstellende maximale und minimale Betrag der Differenz von Remission und Transmission um nicht mehr als 40% bevorzugt um nicht mehr als 25% sowie am meisten bevorzugt um nicht mehr als 15% unterscheidet
- und/oder bei einer ersten Gruppe von bevorzugten Ausführungsformen einen Brechwert größer oder gleich 1,6 aufweist.

Womit ohne Einschränkung der Allgemeinheit bezüglich der Generierung weiterer Lichtfarben die Konversion blauen in gelbes Licht, um in der Summe weißes Licht oder den physiologischen Farbeindruck weißen Lichtes zu erhalten, ermöglicht wird. Als weißes Licht wird nachfolgend nicht nur das vollständige Spektrum sichtbaren Lichtes sondern insbesondere auch jede Art von Licht bezeichnet, welches zumindest beim Menschen den Eindruck weißen Lichtes erzeugt.

Im Speziellen umfasst die Erfindung bevorzugt:
- die Konversion blauen Lichtes einer Primärlichtquelle mittels eines Leuchtstoffes in gelbes Licht, um in der Summe den Farbeindruck weißen Lichtes zu erhalten. Im speziellen Falle zur Herstellung einer als weiß empfundenen Lichtquelle basierend auf einer blauen LED und einem Leuchtstoff des Types Ce:YAG (mit Emission in dem Wellenlängenbereich um 560nm).
- Konversion blauen Lichtes mittels mindestens einem jeweils passenden Leuchtstoff in gelbes und/oder rotes und/oder grünes Licht, um in der Summe weißes Licht zu erhalten (in der Mischung von RGB oder RGGB)
Konversion blauen Lichtes mittels mindestens einem jeweils passenden Leuchtstoff in gelbes und/oder rotes und/oder grünes Licht, um in der Summe Licht einer bestimmten Farbe zu erhalten.
Bevorzugte Leuchtstoffe enthalten als Wirtsmaterial zumindest einen Stoff aus der Gruppe umfassend Oxide, Nitride, Oxynitride, Sulfide, Oxysulfide, Halogenide, Halooxide, Halosulfide, Telluride und Selenide, wobei das Wirtsmaterial zumindest mit einem Stoff aus der Gruppe dotiert ist, welche Seltene Erden (Ce, Eu, Tb, Gd, ......), Übergangsmetalle (Cr, Mn) und Schwermetalle (Tl, Pb, Bi) enthält.

Bei der Konversion von UV-Licht wird in den beschriebenen Fällen jeweils noch ein zusätzlicher Leuchtstoff benötigt, der im blauem Spektralbereich emittiert.

### Gläser und Glasfamilien einer ersten Gruppe

Eine erste Gruppe bevorzugter erfindungsgemäßer Matrixgläser weist nachfolgende Eigenschaften auf:
a.) eine Brechzahl, die größer oder gleich 1,6 ist, wobei das Matrixglas einen Brechwert größer oder gleich 1,6, bevorzugt 1,65 - 2,0 bevorzugt 1,8-1,95 hat und damit an die Leuchtstoffe (im spez. Ce:YAG n ∼ 1,8) angepasst ist.
b.) Bei welchem die Differenz zur Brechzahl des Materials des Halbleiterelementes "minimiert" ist, welche je nach Konfiguration des Halbleiterelementes beispielsweise: 1,8 (Saphir), 2,5 (GaN oder InGaN) bis 3,5 (AlInGaP) beträgt. Insbesondere im direkten Kontakt von Konverter und Halbleiterelement ist diese Anpassung im Rahmen des Möglichen wichtig, um effizient Licht in den Konverter einzukoppeln.
c.) Das Matrixglas hat im Wesentlichen keine Eigenfarbe, welches umfasst,
   ∘ dass das Matrixglas als Bulkmaterial/Glas eine hohe Reintransmission τᵢ > 80% bei d = 1 mm ohne Absorptionsbanden im Wellenlängenbereich von 350 bis 800 nm hat,o dass die Summe aus Transmission und Remission das Grundglase/Matrixglases allein (d.h. undotiert) gesintert, insbesondere für die erfindungsgemäße Korngrößenverteilung d10 >=0,7µm, d50>= 3µm und d90 <= 150µm, im Spektralbereich von 350 nm bis 800 nm (inklusive dem Spektralbereich der jeweiligen Primärlichtquelle) mindestens >80%, bevorzugt >85%, meist bevorzugt >90% beträgt, wobei als Spektralbereich der Primärlichtquelle der Bereich im Spektrum, innerhalb welchem die Primärlichtquelle Licht emittiert, bezeichnet wird,
   ∘ sowie der sich über diese Spektralbereiche einstellende maximale und minimale Betrag der Differenz von Remission und Transmission um nicht mehr als 40% bevorzugt um nicht mehr als 25% sowie am meisten bevorzugt um nicht mehr als 15% unterscheidet
   ∘ dass die Remission des mit Leuchtstoffen dotierten Matrixglases im gesinterten Zustand im Spektralbereich der Primärlichtquelle <30%, bevorzugt < 25, meist bevorzugt <15% beträgt, und
   ∘ dass die Summe aus Transmission und Remission des mit Leuchtstoffen dotierten Matrixglases im gesinterten Zustand im Spektralbereich von 350nm bis 800 nm, exklusive des Spektralbereichs der Primärlichtquellen, mindestens >80%, bevorzugt >85%, meist bevorzugt >90% beträgt,
   ∘ sowie der sich über diese Spektralbereiche einstellende maximale und minimale Betrag der Differenz von Remission und Transmission um nicht mehr als 40% bevorzugt um nicht mehr als 25% sowie am meisten bevorzugt um nicht mehr als 15% unterscheidet

Vorteilhaft ist bei den erfindungsgemäßen Matrixgläsern ferner eine in weiten Bereichen einstellbare Konverterdicke (ca. 30pm bis einige 1000µm): dies führt zu einer größeren Designfreiheit für die Bereitstellung hocheffizienter Konversionsmaterialien, da dann Dichte und absolute Menge der Leuchtstoffe unabhängig variiert werden kann und somit Farbort und Effizienz der mit dem Matrixglas und der Primärlichtquelle versehenen Lichtquelle optimal eingestellt werden kann.

Sehr vorteilhaft ist auch die chemische Inertheit gegenüber den einzubettenden Phosphoren und vice versa, dies bedeutet die chemische Inertheit der einzubettenden Phosphore oder Leuchtstoffe gegenüber dem Matrixglas.

Von großem Vorteil ist es ferner, wenn die Glasmatrix und die Leuchtstoffe nicht nur gegeneinander inert sind sondern auch bei erhöhten Temperaturen nicht miteinander reagieren bzw. im Falle einer Reaktion die Leuchtstoffeigenschaften nicht negativ beeinflusst werden. Dies sowohl im Falle der Herstellung des Konverters als auch beim Betrieb der resultierenden Lichtquelle.

Vorteilhaft ist auch die Prozessierbarkeit in etablierten industriellen Prozessen, die einfache, endformnahe Fertigung, bzw. Fertigung der Endform zu plausiblen Kosten sowie Sonderausprägungen eines Konverters (beispielsweise Gradienten in der Leuchtstoffdotierung, zusätzliche optische Elemente) zulassen.

Folgende Gläser, Glasfamilien erfüllen die erfindungsgemäßen Anforderungen in überraschender Weise sehr gut:
Lanthan-Borosilikatgläser mit Zinkanteil und Aluminium-Borosilikate mit Yttriumanteil.

### Beispielgläser sind:

- N-LaSF40 (SCHOTT AG), N-LASF46 (SCHOTT AG)
- P-LaSF47 (SCHOTT AG), K-VC89 (Sumita),
- N-KzFS5(SCHOTT AG), S-NBH5 (Ohara),
- N-KzFS8(SCHOTT AG),
- Y₂O₃-haltige Gläser (SCHOTT AG)mit n_{d} größer oder gleich 1,6: N-LAK9, N-LAK33A, N-LAK34, N-LAF2, N-LAF7, N-LAF21, N-LAF34, N-LASF44, P-LASF47 sowie K-LAFK60 (Sumita)

Es ist ferner mit der vorliegenden Erfindung u. a. vorteilhaft möglich, eine Glasmatrix für Konversionsmaterialien bereitzustellen, mit welchem, insbesondere auch aufgrund ökologischer Erwägungen, ohne die Verwendung von Tl₂O, TeO₂ und As₂O₃ und vorzugsweise auch ohne die Komponente Bi₂O₃, gewünschte und vorteilhafte optische Eigenschaften (n_{d}/ν_{d}) bei gleichzeitig geringen Verarbeitungstemperaturen ermöglicht werden.

Diese Gläser dürfen keine Trübung, Kristallisation und Eigenfärbung als Matrixglas aufweisen, sollen ferner ohne Eigenfarbe sinterbar sein und möglichst wenig chemisch reaktiv gegenüber den später enthaltenen Leuchtstoffen sein.

Bei einer ersten Gruppe erfindungsgemäßer Matrixgläser haben diese einen Brechwert n_{d} von n_{d} >= 1,6 und vorzugsweise eine geringe Verarbeitungstemperatur. Auch sollen diese gut zu schmelzen und zu verarbeiten sein, sowie eine ausreichende Entglasungsstabilität aufweisen, die eine Fertigung der Gläser in kontinuierlich geführten Aggregaten möglich macht.

Insbesondere wird ein arsen-, und vorzugsweise Bi₂O₃-freies Glas mit einem Brechwert nd von nd ≥ 1,6 bereitgestellt, welches die folgenden Komponenten umfasst (in Gew.-% auf Oxidbasis).

Die nachfolgende Tabelle umfasst Bsp. 2 bis 4 der ersten Gruppe

| | | | |
|---|---|---|---|
| SiO₂ | 3 | - | 7 |
| B₂O₃ | 16 | - | 22 |
| Al₂O₃ | 0 | - | 1 |
| ZnO | 3 | - | 26 |
| TiO₂ | 1 | - | 11 |
| ZrO₂ | 1 | - | 8 |
| La₂O₃ | 32 | - | 45 |
| Nb₂O₅ | 5 | - | 16 |
| WO₃ | 0 | - | 7 |
| Y₂O₃ | 0 | - | 5 |
| BaO | 0 | - | 6 |
| MgO | 0 | - | 6 |
| CaO | 0 | - | 6 |
| SrO | 0 | - | 6 |
| Summe Erdalkalioxide | 0 | - | 10 |
| Läutermittel | 0 | - | 2 |

Die nachfolgende Tabelle umfasst Bsp. 5 der ersten Gruppe

| | | | |
|---|---|---|---|
| SiO₂ | 1 | - | 5 |
| B₂O₃ | 29 | - | 35 |
| Al₂O₃ | 20 | - | 26 |
| Y₂O₃ | 35 | - | 45 |
| ZnO | 0 | - | 6 |
| TiO₂ | 0 | - | 6 |
| ZrO₂ | 0 | - | 6 |
| La₂O₃ | 0 | - | 6 |
| Nb₂O₅ | 0 | - | 6 |
| WO₃ | 0 | - | 6 |
| BaO | 0 | - | 6 |
| MgO | 0 | - | 6 |
| CaO | 0 | - | 6 |
| SrO | 0 | - | 6 |
| Summe Erdalkalioxide | 0 | - | 10 |
| Läutermittel | 0 | - | 2 |

Die nachfolgende Tabelle umfasst Bsp.6 der ersten Gruppe

| | | | |
|---|---|---|---|
| SiO₂ | 37 | - | 45 |
| Al₂O₃ | 3 | - | 7 |
| Na₂O+K₂O | 8 | - | 12 |
| BaO | 22 | - | <30 |
| ZnO | 5 | - | 10 |
| ZrO₂ | 2 | - | 7 |
| La₂O₃ | 2 | - | <4 |
| P₂O₅ | 0 | - | 6 |
| MgO+CaO | 0 | - | 8 |
| Läutermittel | 0 | - | 2 |

### Bevorzugt

| | | | |
|---|---|---|---|
| SiO₂ | 39 | - | 45 |
| Al₂O₃ | 3 | - | 7 |
| Na₂O+K₂O | 8 | - | 12 |
| BaO | 24 | - | <30 |
| ZnO | 5 | - | 10 |
| ZrO₂ | 2 | - | 7 |
| La₂O₃ | 2 | - | <4 |
| P₂O₅ | 0 | - | 6 |
| MgO+CaO | 0 | - | 8 |
| Läutermittel | 0 | - | 2 |

Das erfindungsgemäße Glas ist vorzugsweise auch frei von färbenden, und/oder optisch aktiven, wie laseraktiven, Komponenten.

Insbesondere ist das erfindungsgemäße Glas vorzugsweise auch frei von Komponenten, welche redoxempfindlich sind, wie beispielsweise Ag₂O oder Bi₂O₃, und/oder frei von toxischen bzw. gesundheitsschädlichen Komponenten, wie beispielsweise die Oxide von Tl, Te, Be und As.

Gemäß einer weiteren Ausführungsform der vorliegenden Erfindung ist das in dieser Beschreibung und in den Ansprüchen genannte Glas auch vorzugsweise frei von anderen, in den Ansprüchen nicht genannten Komponenten, d.h. gemäß einer derartigen weiteren Ausführungsform besteht das Glas im wesentlichen aus den genannten Komponenten. Der Ausdruck "im wesentlichen bestehen aus" bedeutet dabei, dass andere Komponenten höchstens als Verunreinigungen vorliegen, jedoch der Glaszusammensetzung nicht als einzelne Komponente beabsichtigt zugegeben werden.

Das erfindungsgemäße Glas kann übliche Läutermittel in geringen Mengen beinhalten. Vorzugsweise beträgt die Summe der zugesetzten Läutermittel höchstens 2,0 Gew.-%, mehr bevorzugt höchstens 1,0 Gew.-%. Als Läutermittel kann in dem erfindungsgemäßen Glas mindestens eine der folgenden Komponenten enthalten sein (in Gew.-%, additiv zur übrigen Glaszusammensetzung):

| | | |
|---|---|---|
| Sb₂O₃ | 0 - 1 | Und / oder |
| As₂O₃ | 0 - 1 | Und / oder |
| SnO | 0 - 1 | Und / oder |
| SO₄²⁻ | 0 - 1 | Und / oder |
| Cl⁻ | 0 - 1 | Und / oder |
| F⁻ | 0 - 1 | |

Auch Fluor und fluorhaltige Verbindungen neigen während des Schmelz- und Aufschmelzvorgangs und während des Sinterprozesses zum Verdampfen und erschweren dadurch ein genaues Einstellen der Glaszusammensetzung bzw. nach dem Sintern der Glasmatrix. Das erfindungsgemäße Glas ist daher vorzugsweise auch fluorfrei.

Die Tabellen enthalten Ausführungsbeispiele in den bevorzugten Zusammensetzungsbereichen. Die in den Beispielen beschriebenen Gläser wurden mit unterschiedlichen Prozessparametern hergestellt, was einhergeht mit den physikalischen Eigenschaften der Gläser.

### Ausführungsbeispiele der Herstellung der Matrixgläser

### Herstellung Beispiel 6:

Die Rohstoffe für die Oxide, werden abgewogen, ein oder mehrere Läutermittel, wie z. B. As₂O₃, zugegeben und anschließend gut gemischt. Das Glasgemenge wird bei ca. 1330°C in einem diskontinuierlichen Schmelzaggregat eingeschmolzen, danach geläutert (1380°C) und homogenisiert. Bei einer Gusstemperatur von etwa 1380°C kann das Glas gegossen und zu den gewünschten Abmessungen z.B. als Ribbons verarbeitet werden. In großvolumigen, kontinuierlichen Aggregaten können die Temperaturen erfahrungsgemäß um mindestens ca. 100K abgesenkt werden.

Ribbons werden erhalten durch Gießen des Glases über zwei Walzen. Diese lassen sich besser zu Pulver vermahlen, einer Vorstufe zum Sintern, als Scherben.

**Tabelle 1: Schmelzbeispiel für 100 kg berechnetes Glas (gemäß Beispiel 6)**

| Oxid | Gew.-% | Rohstoff | Einwaage (g) |
|---|---|---|---|
| SiO₂ | 39,9 | SiO₂ | 39880,35 |
| Al₂O₃ | 5,0 | Al(OH)₃ | 7669,3 |
| Na₂O | 10,0 | Na₂CO₃ | 17099,59 |
| ZnO | 8,0 | ZnO | 7976,07 |
| ZrO₂ | 5,0 | ZrO₂ | 4985,04 |
| BaO | 25,9 | BaCO₃ | 33621,56 |
| | 1,0 | Ba (NO₃) ₂ | 1688,70 |
| La₂O₃ | 5,0 | La₂O₃ | 5030,32 |
| As₂O₃ | 0,3 | As₂O₃ | 299,10 |
| Summe | 100,1 | | 118250,04 |

Die Eigenschaften des so erhaltenen Glases sind in der nachfolgenden Tabelle als Beispiel 6 angegeben.

**Tabelle 2: Ausführungsbeispiele für die Glasmatrix für das Konversionsmaterial**

| **Bsp** | **2** | **3** | **4** | **5** | **6** |
|---|---|---|---|---|---|
| **Oxide** | | | | | |
| **SiO₂** | 5,3 | 5,4 | 5,6 | 2,8 | 40 |
| **B₂O₃** | 18,5 | 19,6 | 18,1 | 32,1 | |
| **Al₂O₃** | | | | 23,5 | 5,0 |
| **Na₂O** | | | | | 10,0 |
| **PbO** | | | | | |
| **ZnO** | 22,1 | 23,5 | 4,9 | | 8,0 |
| **BaO** | | | 2,1 | | 27 |
| **TiO₂** | 2,7 | 4,2 | 8,8 | | |
| **ZrO₂** | 2,9 | 3,0 | 6,0 | | 5,0 |
| **La₂O₃** | 35,5 | 36,8 | 42,3 | | 5,0 |
| **Nb₂O₅** | 7,4 | 7,9 | 12,3 | | |
| **WO₃** | 5,1 | | | | |
| **Y₂O₃** | | | | 41,6 | |
| **n_{d}** | 1,834 | 1,834 | 1,901 | 1,6641 | 1,6001 |
| **CTE _{(20,300°C)} [10⁻⁶/K]** | 6,9 | 6,9 | 7,2 | 6,97 | 10,8 |
| **Tg [°C]** | 585 | 590 | 645 | 684 | 541 |
| **T (h=10^{7,6} dPas) [°C]** | 673 | 677 | 735 | | 742 |
| **T (h=10⁴dPas) [°C]** | 786 | | 852 | | 983 |

### Bevorzugte Ausführungsbeispiele des Herstellungsverfahrens des Konversionsmaterials

Die im Folgenden beschriebenen Beispiele sowohl der ersten als auch der zweiten Gruppe erfindungsgemäßer Ausführungsformen unterliegen im wesentlichen jeweils der gleichen Methodik zur Herstellung.

Pulver der Ausgangsgläser vermahlen auf eine Körnung mit der Verteilung von d10 >= 0,7µm, d50 >= 3µm und d90 <= 150µm - werden mit einem Leuchtstoff - beispielsweise Ce:YAG einer Körnung mit einem mittleren Durchmesser d50 zwischen 1 µm und 50 µm, besonders bevorzugt zwischen 1 µm und 20 µm, am meisten bevorzugt zwischen 1µm und 15µm, auf Basis von Gewichtsprozenten eingewogen und in einem Mischaggregat- beispielsweise Taumelmischer Turbula (Typ T2C / Fa. Willi A. Bachofen / Basel) oder Speedmix (Typ DAC 150 FVZ / Hauschildt Engineering) über 1 bis 120 min, bevorzugt 1 bis 5 min (Speedmix)bzw. 15 bis 120 min (Turbula), meist bevorzugt 1 bis 3 min (Speedmix) bzw. 60 bis 120 min (Turbula) gemischt.

Wobei der D50- oder auch Medianwert, derjenige Wert ist, welcher eine Korngröße angibt, bei der 50 % der Partikel feiner, und 50 % gröber sind als dieser angegebene Wert.

Es existieren auch nanoskalige Phosphore, dies bedeutet Leuchtstoffe mit äußeren Abmessungen im Bereich einiger Nanometer, insbesondere von weniger als 100 bis 200 nm, welche ebenfalls verwendbar sind.

Die Pulvermischung oder auch das pure Glaspulver wird anschließend in Portionen der Gestalt entnommen, dass ein Pulverkörper mit einem Durchmesser von ca. 10 mm, bevorzugt 5mm, am bevorzugtesten von weniger als 5mm aber mindestens 1 mm und einer Höhe von ca. 3 mm bzw. 1 mm oder 0,5 bis 0,1 mm erstellt werden kann.

Die Schüttung erfolgt auf ein thermisch stabiles Substrat in ein die Schüttung begrenzendes beispielsweise rohr- oder ringförmiges Element und wird manuell verfestigt und/oder einem uniaxialen (bspw. Presse der Fa. Paul Weber; Typ PW40) und/oder kaltisostatischen (Presse der Fa. Paul Weber; Typ KIP500E) Pressprozess zugeführt, der durch Zugabe üblicher Presshilfsmittel optimiert gestaltet werden kann. Der Druckbereich für den uniaxialen Pressprozess liegt bei 100 bis 5000 bar, vorzugsweise 500 bis 2500 bar. Der Druckbereich für den kaltisostatischen Pressprozess liegt bei 500 bis 3000 bar, vorzugsweise 1000 bis 2500 bar. Dies erfolgt derart, dass anschließend die äußere Abgrenzung entfernt werden kann.

Danach erfolgt die Temperung der Proben bei Temperatur-, Zeitregimen (Aufheizraten und Haltezeiten), die den Matrixgläsern hinsichtlich deren Erweichungstemperatur angepasst sind. Abhängig von der Steilheit des Viskositätsverlaufes des Glases liegen ohne Beschränkung der Allgemeinheit die Zieltemperaturen T der Temperung im Bereich zwischen EW (Erweichungstemperatur) und Va (Verarbeitungstemperatur) des Matrixglases, in der Regel in einem Regime von EW + 150K oder so, dass die Viskosität des eingesetzten Glases im Bereich zwischen h = 10¹⁴ dPas und h = 10⁶ dPas, bevorzugt zwischen h = 10^{13.5} dPas und h=10⁷ dPas, besonders bevorzugt zwischen h = 10¹⁰ dPas und h=10⁷ dPas liegt.

Die Aufheizung erfolgt so, dass von einem ausgeglichenen Temperaturniveau im Ofen und insbesondere der Schüttung bzw. ggf. mehrerer Schüttungen ausgegangen werden kann.

Insbesondere das zu wählende Zeitregime ist dabei typischerweise von Art, Größe und Auslegung (auch der Regelung) des Temperaggregates abhängig. Im vorliegenden Ofen (Typ Nabertherm N70/H; Regelung Naber C16 und Eurotherm Typ 2604) haben sich Aufheizraten zwischen 1 K/min bis 30 K/min, bevorzugt 1 K/min bis 20 K/min, meist bevorzugt 1 K/min bis 10 K/min auf Zieltemperatur und Haltezeiten vor Abkühlung mit Ofenkennlinie von 0 bis 60 min, bevorzugt 0 bis 30, meist bevorzugt 10 bis 30 min bewährt.

Nach der Temperung oder den Temperungen werden die so entstandenen Kompositkörper bestehend aus Glasmatrix und mindestens einem Leuchtstoff nachbearbeitet, dabei kommen Schleif- und oder Läppmittel der Körnung bis < 400µm (beidseitig) sowie fallweise beispielsweise Diamant-Poliermittel Körnung bis < 1µm (einseitig) zum Einsatz, so dass damit beidseitig raue bzw. einseitig rau bzw. polierte Oberflächen vorliegen.

Die Messung der optischen Daten Remission bzw. Transmission erfolgte in einem üblichen Spektrometer (bspw. Perkin Elmer Lambda 9 oder 900) mit Probe vor (Transmission) bzw. hinter (Remission) einer Integrationssphäre im Wellenlängenbereich von 250 bis 2500 nm, mindestens aber im Bereich von 300 bis 800 nm, um die vorstehend genannten Größen zu ermitteln. Die Bestimmung der Größen T_{halb} und T_{vorwärts} erfolgt ebenso mittels der Integrationssphäre. Für weitere Details sei auf die Ausführungen zur Figur 1 verwiesen.

Die interne Konversionsquantenausbeute, der in der Glasmatrix eingebetteten Leuchtstoffe, war gegenüber der internen Konversionsquantenausbeute, der nicht eingebetteten Leuchtstoffe, um nicht mehr als 20 %, bevorzugt um nicht mehr als 10 % und am meisten bevorzugt um nicht mehr als 5 % vermindert. Gemessen wurde die interne Konversionsquantenausbeute jeweils mittels der Abklingzeiten der angeregten optischen Übergänge in den Leuchtstoffen.

**Tabelle 3:**

| Beispiel | A | B | C | D | E | F | G | H |
|---|---|---|---|---|---|---|---|---|
| Glastyp/ | Bsp.2 | Bsp.2 | Bsp. 2 | Bsp 2 | Bsp. 3 | Bsp. 3 | Bsp. 4 | Bsp. 6 |
| Anteil gew % | 100 | 98 | 92,5 | 85 | 95 | 90 | 90 | 90 |
| Leuchtstoffl/Anteil Gew % | 0 | 2 | 5 | 15 | 5 | 10 | 10 | 10 |
| Leuchtstoff2/Anteil Gew % | 0 | 0 | 2,5 | 0 | 0 | 0 | 0 | 0 |
| Temperatur /°C | 700 | 700 | 700 | 700 | 650 | 650 | 743 | 770 |
| Rampe / K/min | 1 | 1 | 1 | 1 | 15 | 15 | 1 | 1 |
| Haltezeit / min | 0 | 0 | 10 | 5 | 45 | 60 | 0 | 5 |
| Dicke undotiert / mm | 1,5 | 1,5 | 1,5 | 1,5 | 0,5 | 0,5 | 1,5 | 1,5 |
| Remission+Transmissi | 82+10=9 | 82+11= | 81+9=9 | 83+11= | 89+5=9 | 88+7=95 | 75+10= | 80+7=8 |
| on undotiert /%; für Vis (380 - 780 nm) incl. PL 404... 460 nm | 2 | 93 | 0 | 94 | 4 | | 85 | 7 |
| Eigenfarbe undotiert | Keine | keine | keine | keine | keine | keine | keine | Keine |
| Dicke dotiert / mm | -- | 0,5 | 0,5 | 0,2 | 0,5 | 0,3 / 0,5 | 0,5 | 0,5 |
| Remission dotiert Bei PL 460 nm | -- | 29 % | 11% | 15% | 21% | 2 Bsp. 9%/ 11% | 22 | 17 |
| Remission+Transmissi | -- | 79+11= | 78+10= | 80+14= | 81+8=8 | 73+19=9 | 70+11= | 73+11= |
| on dotiert /%; Dicke/mm für Vis (380 - 780 nm) exclusive PL | | 90 | 88 | 94 | 9 | 2/ 78+10=8 8 | 81 | 84 |

### Gläser und Glasfamilien einer zweiten Gruppe

Die nachfolgend beschriebenen Gläser und Glasfamilien einer zweiten bevorzugten Gruppe von Beispielen erfüllen die Anforderungen überraschenderweise ebenfalls, weisen jedoch einen Brechungsindex auf, welcher kleiner als 1,6 ist.

Der Brechungsindex dieser Gläser liegt bevorzugt bei 1,43 bis 1,6 und am meisten bevorzugt bei 1,45 bis 1,49. Hierdurch sind diese Gläser an die Brechzahl der die Lichtquellen / Einheiten umgebenden Polymere (Epoxyde oder Silikone, i.a. Polymer mit n_{d} zw. 1,3 und 1,6) relativ gut angepasst.

Ferner wird die Differenz zur Brechzahl von Luft als letztlich das Gesamtsystem Lichtquelle umgebendes Medium deutlich vermindert.

Besonders im indirekten Kontakt von Konvertermaterial zu Halbleiterelement und weiteren umgebenden (Bau-) Elementen ist diese Anpassung wichtig, um anregendes Licht (beispielsweise einer blauen LED), welches den Konverter durchdringt, sowie im Konverter generiertes Licht aus dem Konverter effizient auszukoppeln. Als indirekter Kontakt wird hierbei eine Anordnung ohne direkten mechanischen Kontakt verstanden, dies bedeutet insbesondere so, dass sich die evaneszenten Felder des sich ausbreitenden Lichtes, welche die jeweiligen Materialien umgeben, nicht oder im Wesentlichen nicht messbar überlagern.

Gläser dieser Gruppe umfassen beispielsweise ZinkPhosphate, Borosilikate, Aluminium-Borosilikate und Erdalkali-Silikate. Erfindungsgemäß umfassen Gläser dieser Gruppe Zinkphosphate.

### Bsp.-Gläser sind:

- BF33 / BF40 (SCHOTT AG), Pyrex (Corning)
- 8250 (SCHOTT AG)
- AF32 (SCHOTT AG), AF37 (SCHOTT AG), AF45 (SCHOTT AG), 1737 (Corning), Eagle 2000(Corning), Eagle XG (Corning)
- N-SK 57 (SCHOTT AG)
- D263 (SCHOTT AG)
- Opt. Gläser K-PBK40 (Sumita), K-CSK120 (Sumita), P-SK5 (Hikari), K-PSK50 (Sumita), D-K9L (GDGM), D-ZK2(GDGM), D-ZK3 (GDGM)

Vorteilhaft wird mit vorliegender Erfindung u. a., eine Glasmatrix für Konversionsmaterialien bereitgestellt, mit welcher, insbesondere auch aufgrund ökologischer Erwägungen, ohne die Verwendung von Tl₂O, TeO₂ und As₂O₃ und vorzugsweise auch ohne die Komponente Bi₂O₃, gewünschte und vorteilhafte optische Eigenschaften (n_{d}/v_{d}) bei gleichzeitig geringen Verarbeitungstemperaturen ermöglicht werden.

Diese Gläser weisen keine Trübung, Kristallisation und Eigenfärbung als Matrixglas auf und sind ferner ohne Eigenfarbe sinterbar. Dabei sind diese Gläser chemisch nur wenig reaktiv gegenüber den verwendeten Leuchtstoffen.

Ferner sind diese Gläser gut zu schmelzen und zu verarbeiten und weisen eine ausreichende Entmischungs- und Kristallisationsstabilität auf, die eine Fertigung der Gläser in kontinuierlich geführten Aggregaten möglich macht.

Insbesondere wird ein arsen-, und vorzugsweise Bi₂O₃-freies Glas mit einem Brechwert n_{d} von n_{d} < 1,6 bereitgestellt, welches die folgenden Komponenten umfasst (in Gew.-% auf Oxidbasis):

### Die nachfolgende Tabelle umfasst Beispiel 1 (erfindungsgemäß) der zweiten Gruppe

| | | | |
|---|---|---|---|
| P2O5 | 44 | - | 55 |
| B2O3 | 0 | - | 8 |
| Al2O3 | 0 | - | 5 |
| ZnO | 22 | - | 32 |
| La₂O₃ | 0,5 | - | 5 |
| BaO | 4 | - | 13 |
| Na₂O | 5 | - | 15 |
| K₂O | 0 | - | 8 |
| MgO | 0 | - | 5 |
| CaO | 0 | - | 5 |
| Summe Alkalioxide | | <= | 15 |
| Summe Erdalkalioxide | | <= | 8 |

### Bevorzugt

| | | | |
|---|---|---|---|
| P₂O₅ | 46 | - | 53 |
| B₂O₃ | 0 | - | 5 |
| Al₂O₃ | 0 | - | 3 |
| ZnO | 24 | - | 31 |
| La₂O₃ | 0,5 | - | 4 |
| BaO | 4 | - | 11 |
| Na₂O | 6 | - | 13 |
| K₂O | 0 | - | 6 |
| MgO | 0 | - | 4 |
| CaO | 0 | - | 4 |
| Summe Alkalioxide | | <= | 13 |
| Summe Erdalkalioxide | | <= | 5 |
| Läutermittel | | <= | 2 |

### Die nachfolgende Tabelle umfasst Beispiel 2 der zweiten Gruppe

| | | | |
|---|---|---|---|
| SiO2 | 40 | - | 44 |
| B2O3 | 14 | - | 16 |
| Al2O3 | 3 | - | 6 |
| ZnO | 2 | - | 4,5 |
| TiO2 | 0,1 | - | 0,5 |
| BaO | 23 | - | 27 |
| SrO | 0,1 | - | 1 |
| Li₂O | 5,5 | - | <7 |
| Na₂O | 2 | - | 4 |
| K₂O | 0 | - | 4 |

### Bevorzugt

| | | | |
|---|---|---|---|
| SiO₂ | 41 | - | 43 |
| B₂O₃ | 14 | - | 16 |
| Al₂O₃ | 3,5 | - | 6 |
| ZnO | 2,5 | - | 4 |
| TiO₂ | 0,1 | - | 0,5 |
| BaO | 23 | - | 27 |
| SrO | 0,3 | - | 1 |
| Li₂O | 5,5 | - | 6,5 |
| Na₂O | 2 | - | 4 |
| K₂O | 0 | - | 6 |

### Die nachfolgende Tabelle umfasst Beispiel 3 der zweiten Gruppe

| | | | |
|---|---|---|---|
| SiO₂ | >58 | - | 65 |
| B₂O₃ | >6 | - | 10,5 |
| Al₂O₃ | >14 | - | 25 |
| ZnO | 0 | - | <2 |
| BaO | >3 | - | 5 |
| MgO | 0 | - | <3 |
| CaO | | | <=9 |
| MgO+CaO+BaO | | | >=8 |
| ZrO₂ | 0 | - | 2 |
| TiO₂ | 0 | - | 2 |
| ZrO₂+TiO₂ | 0 | - | 2 |
| As₂O₃ | 0 | - | 1,5 |
| Sb₂O₃ | 0 | - | 1,5 |
| CeO₂ | 0 | - | 1,5 |
| Cl⁻ | 0 | - | 1,5 |
| F⁻ | 0 | - | 1,5 |
| SO₄²⁻ | 0 | - | 1,5 |
| As₂O₃+Sb₂O₃+SnO₂+ CeO₂+Cl⁻+F⁻+SO₄²⁻ | | | <1,5 |

### Bevorzugt

| | | | |
|---|---|---|---|
| SiO₂ | >58 | - | 65 |
| B₂O₃ | >8 | - | 10,5 |
| Al₂O₃ | >18 | - | 20,5 |
| ZnO | 0,1 | - | <2 |
| BaO | >3 | - | 4 |
| MgO | 0 | - | <3 |
| CaO | | - | <=9 |
| MgO+CaO+BaO | | | >=8 |
| ZrO₂ | 0 | - | 2 |
| TiO₂ | 0 | - | 2 |
| ZrO₂+TiO₂ | 0 | - | 2 |
| As₂O₃ | 0 | - | 1,5 |
| Sb₂O₃ | 0 | - | 1,5 |
| CeO₂ | 0 | - | 1,5 |
| Cl⁻ | 0 | - | 1,5 |
| F⁻ | 0 | - | 1,5 |
| SO₄²⁻ | 0 | - | 1,5 |
| As₂O₃+Sb₂O₃+SnO₂+ CeO₂+Cl⁻+F⁻ +SO₄²⁻ | | | <1,5 |

### Die nachfolgende Tabelle umfasst Beispiel 5 der zweiten Gruppe

| | | |
|---|---|---|
| SiO₂ | 55 | - 79 |
| B₂O₃ | 3 | - 25 |
| Al₂O₃ | 0 | - 10 |
| Li₂O | 0 | - 10 |
| Na₂O | 0 | - 10 |
| K₂O | 0 | - 10 |
| Li₂O+Na₂O+K₂O | 0,5 | - 16 |
| MgO | 0 | - 2 |
| CaO | 0 | - 3 |
| SrO | 0 | - 3 |
| BaO | 0 | - 3 |
| ZnO | 0 | - 3 |
| MgO+CaO+SrO+BaO+ZnO | 0 | - 10 |
| ZrO₂ | 0 | - 3 |
| CeO₂ | 0 | - 1 |
| WO₃ | 0 | - 1 |
| Läutermittel | 0 | - 2 |

### Die nachfolgende Tabelle umfasst Beispiel 6 der zweiten Gruppe

| | | | |
|---|---|---|---|
| SiO₂ | 65 | - | 82 |
| B₂O₃ | 5 | - | 13 |
| Al₂O₃ | 2 | - | 8 |
| ZrO₂ | 0 | - | 2 |
| Li₂O+Na₂O+K₂O | 3 | - | 10 |
| MgO+CaO+SrO+BaO+ZnO | 0 | - | 7 |
| Läutermittel | 0 | - | 2 |

Das erfindungsgemäße Glas ist vorzugsweise auch frei von färbenden, und/oder optisch aktiven, wie laseraktiven, Komponenten.

Insbesondere ist das erfindungsgemäße Glas vorzugsweise auch frei von Komponenten, welche redoxempfindlich sind, wie beispielsweise Ag₂O oder Bi₂O₃, und/oder frei von toxischen bzw. gesundheitsschädlichen Komponenten, wie beispielsweise die Oxide von Tl, Te, Be und As. Jedenfalls ist das Glas bevorzugt frei von Arsen.

Gemäß einer Ausführungsform der vorliegenden Erfindung ist das erfindungsgemäße Glas auch vorzugsweise frei von anderen, in den Ansprüchen nicht genannten Komponenten, d.h. gemäß einer derartigen Ausführungsform besteht das Glas im wesentlichen aus den genannten Komponenten.

Der Ausdruck "im wesentlichen bestehen aus" bedeutet dabei, dass andere Komponenten höchstens als Verunreinigungen vorliegen, jedoch der Glaszusammensetzung nicht als einzelne Komponente beabsichtigt zugegeben werden.

Das erfindungsgemäße Glas kann übliche Läutermittel in geringen Mengen beinhalten. Vorzugsweise beträgt die Summe der zugesetzten Läutermittel höchstens 2,0 Gew.-%, mehr bevorzugt höchstens 1,0 Gew.-%. Als Läutermittel kann in dem erfindungsgemäßen Glas mindestens eine der folgenden Komponenten enthalten sein (in Gew.-%, additiv zur übrigen Glaszusammensetzung):

| | | |
|---|---|---|
| Sb₂O₃ | 0 - 1 | Und / oder |
| As₂O₃ | 0 - 1 | Und / oder |
| SnO | 0 - 1 | Und / oder |
| SO₄²⁻ | 0 - 1 | Und / oder |
| Cl⁻ | 0 - 1 | Und / oder |
| F⁻ | 0 - 1 | |

Auch Fluor und fluorhaltige Verbindungen neigen während des Schmelz- und Aufschmelzvorgangs und während des Sinterprozesses zum Verdampfen und erschweren dadurch ein genaues Einstellen der Glaszusammensetzung bzw. nach dem Sintern der Glasmatrix. Das erfindungsgemäße Glas ist daher vorzugsweise auch fluorfrei.

Die in den Beispielen beschriebenen Gläser wurden mit unterschiedlichen Prozessparametern hergestellt, was einhergeht mit den physikalischen Eigenschaften der Gläser.

### Herstellung Beispiel 2:

Die Rohstoffe für die Oxide werden abgewogen, ein oder mehrere Läutermittel, wie z. B. Sb₂O₃, zugegeben und anschließend gut gemischt. Das Glasgemenge wird bei ca. 1320°C in einem kontinuierlichen Schmelzaggregat eingeschmolzen, danach geläutert (1370°C) und homogenisiert. Bei einer Gusstemperatur von etwa 1320°C kann das Glas gegossen und zu den gewünschten Abmessungen z.B. als Ribbons verarbeitet werden. In großvolumigen, kontinuierlichen Aggregaten können die Temperaturen erfahrungsgemäß um mindestens ca. 100 K abgesenkt werden. Ribbons werden erhalten durch Gießen des Glases über zwei Walzen. Diese lassen sich besser zu Pulver vermahlen, einer Vorstufe zum Sintern, als Scherben.

**Tabelle 4: Schmelzbeispiel für 100 kg berechnetes Glas (gemäß Beispiel 8)**

| Oxid | Gew.-% | Rohstoff | Einwaage (g) |
|---|---|---|---|
| SiO₂ | 42,85 | SiO₂ | 42913,69 |
| B₂O₃ | 14,9 | B₂O₃ | 15128,18 |
| Al₂O₃ | 4,15 | AlO(OH) | 5348,39 |
| Li₂O | 6,27 | LiNO₃ | 15598,33 |
| Na₂O | 2,7 | Na₂CO₃ | 4613,41 |
| ZnO | 3,4 | ZnO | 3400,29 |
| SrO | 0,72 | Sr(NO₃) ₂ | 1484,69 |
| BaO | 24,5 | BaCO₃ | 31779,59 |
| TiO₂ | 0,2 | TiO₂ | 201,51 |
| Sb₂O₃ | 0,30 | Sb₂O₃ | 301,14 |
| Summe | 100,20 | | 120769,21 |

Die Eigenschaften des so erhaltenen Glases sind in der nachfolgenden Tabelle 5 als Beispiel 8 angegeben.

**Tabelle 5:**

| Oxide | Bsp. 7 erfind ungsge mäß | Bsp. 8 | Bsp. 9 | Bsp. 10 | Bsp. 11 | Bsp. 12 |
|---|---|---|---|---|---|---|
| SiO₂ | | 42,9 | 61,4 | 49,5 | 68,2 | 80,6 |
| B₂O₃ | | 14,9 | 8,2 | 14,2 | 19 | 12,7 |
| P₂O₅ | 49,8 | | | | | |
| Al₂O₃ | 1,9 | 4,2 | 16,0 | 11,4 | 2,7 | 2,4 |
| Li₂O | | 6,3 | | | 0,7 | |
| Na₂O | 9,8 | 2,7 | | | 0,7 | 3,5 |
| K₂O | | | | | 7,9 | 0,6 |
| ZnO | 27,2 | 3,4 | | | 0,6 | |
| MgO | | | 2,8 | | | |
| CaO | 2,0 | | 7,9 | | | |
| SrO | | 0,7 | | | | |
| BaO | 7,3 | 24,5 | 3,5 | 24,1 | | |
| TiO₂ | | 0,2 | | | | |
| La₂O₃ | 2,0 | | | | | |
| n_{d} | 1,573 | 1,587 | 1,523 | | 1,49 | 1,47 |
| a_{(20,300°C)} [10⁻⁶/K] | | 8,9 | 3,75 | 4,5 | 5,0 | 3,3 |
| Tg [°C] | 373 | 493 | 709 | 711 | 488 | 525 |
| T (h=10^{7,6} dPas) [°C] | | 593 | 883 | 942 | 715 | 820 |
| T (h=10⁴dPas) [°C] | 551 | 751 | 1273 | 1263 | 1060 | 1260 |

### Weitere Ausführungsbeispiele der Herstellung des Konversionsmaterials

Die im Folgenden beschriebenen Beispiele zu den Gläsern der zweiten Gruppe unterliegen im Wesentlichen jeweils der gleichen Methodik zur Herstellung (siehe hierzu bei den Gläsern der ersten Gruppe). Für weitere oder fehlende Details sei auf die vorstehende Beschreibung verwiesen.

Pulver der Ausgangsgläser - vermahlen auf eine Körnung mit einer Verteilung von d10 >= 0,7µm, d50 >= 3pm und d90 <= 150µm - werden mit einem Leuchtstoff - beispielsweise Ce:YAG einer Körnung mit einem mittleren Durchmesser d50 zwischen 1 µm und 50 µm, besonders bevorzugt zwischen 1 µm und 20 µm, am meisten bevorzugt zwischen 1µm und 15pm, - auf Basis von Gewichtsprozenten eingewogen und in einem Mischaggregat- beispielsweise Taumelmischer Turbula (Typ T2C / Fa. Willi A. Bachofen / Basel) oder Speedmix (Typ DAC 150 FVZ / Hauschildt Engineering) über 1 bis 120 min, bevorzugt 1 bis 5 min (Speedmix)bzw. 15 bis 120 min (Turbula), meist bevorzugt 1 bis 3 min (Speedmix) bzw. 60 bis 120 min (Turbula) gemischt.

Die Pulvermischung oder auch das pure Glaspulver wird anschließend in Portionen der Gestalt entnommen, dass ein Pulverkörper mit einem Durchmesser von ca. 12 mm / 8mm / < 5mm und einer Höhe von ca. 3 mm / 2 / 1 erstellt werden kann.

Die Schüttung erfolgt auf ein thermisch stabiles Substrat in ein die Schüttung begrenzendes beispielsweise rohr- oder ringförmiges Element und wird manuell verfestigt oder einem uniaxialen und/oder kaltisostatischen Pressprozess zugeführt, der durch Zugabe üblicher Presshilfsmittel optimiert gestaltet werden kann.
Dies der Art, dass anschließend die äußere Abgrenzung entfernt werden kann.

Danach erfolgt die Temperung der Proben bei Temperatur-, Zeitregimen (Aufheizraten und Haltezeiten), die den Ausgangsgläsern hinsichtlich deren Erweichungstemperatur angepasst sind. Abhängig von der Steilheit des Viskositätsverlaufes des Glases liegen ohne Beschränkung der Allgemeinheit die Zieltemperaturen T der Temperung im Bereich zwischen EW, der Erweichungstemperatur, und Va, der Verarbeitungstemperatur, des Matrixglases, in der Regel in einem Regime von EW + 150K.

Die Aufheizung erfolgt so, dass von einem ausgeglichenen Temperaturniveau im Ofen und insbesondere der Schüttung bzw. ggf. mehrerer Schüttungen ausgegangen werden kann.

Insbesondere das zu wählende Zeitregime ist dabei typischerweise von Art, Größe und Auslegung (auch der Regelung) des Temperaggregates abhängig. Im vorliegenden Ofen (Typ Nabertherm N70/H; Regelung Naber C16 und Eurotherm Typ 2604) haben sich Aufheizraten zwischen 1 K/min bis 30 K/min, bevorzugt 1 K/min bis 20 K/min, meist bevorzugt 1 K/min bis 10 K/min auf Zieltemperatur und Haltezeiten vor Abkühlung mit Ofenkennlinie von 0 bis 60 min, bevorzugt 0 bis 30, meist bevorzugt 10 bis 30 min bewährt.

Nach der Temperung oder den Temperungen werden die so entstandenen Kompositkörper bestehend aus Glasmatrix und mindestens einem Leuchtstoff nachbearbeitet, dabei kommen Schleif- und oder Läppmittel der Körnung bis < 400pm (beidseitig) sowie fallweise beispielsweise Diamant-Poliermittel Körnung bis < 1µm (einseitig) zum Einsatz, so dass damit beidseitig raue bzw. einseitig rau bzw. polierte Oberflächen vorliegen.

Die Messung der optischen Daten Remission bzw. Transmission erfolgt in einem üblichen Spektrometer mit Probe vor bzw. am Eingang (Transmission) oder hinter am Ausgang (Remission) einer Integrationssphäre (Ulbrichkugel) im Wellenlängenbereich von 250 bis 2500 nm, mindestens aber im Bereich von 300 bis 800 nm, um o.g. Größen zu ermitteln.

**Tabelle 6:**

| Beispiel | I | J | K | L | M | N | O | P |
|---|---|---|---|---|---|---|---|---|
| Glastyp/ Anteil gew % | Bsp.7 100 | Bsp.8 98 | Bsp. 9 95 | Bsp 10 85 | Bsp. 11 95 | Bsp. 11 90 | Bsp 12 100 | Bsp 12 90 |
| Leuchtstoff1/Anteil Ggew % | 0 | 2 | 5 | 15 | 5 | 10 | 10 | 10 |
| Leuchtstoff2/Anteil Ggew % | 0 | 0 | 0 | 0 | 0 | 0 | 0 | 0 |
| Temperatur /°C Rampe / K/min Haltezeit / min | 700 1 0 | 700 1 0 | 700 1 10 | 700 1 5 | 650 15 45 | 650 15 60 | 743 1 0 | 770 1 5 |
| Dicke undotiert / mm | 1,5 | 1,5 | 1,5 | 1,5 | 0,8 | 0,9 | 1,5 | 1,5 |
| Remission+Transmis sion undotiert /%; | 72+9=8 1 | 78+11= 89 | 81+9= 90 | 83+11 =94 | 63+24 =87 | 63+24= 87 | 87+9= 96 | 87+9= 96 |
| für Vis (380 - 780 nm) incl. PL 404...460 nm | | | | | | | | |
| Eigenfarbe undotiert | Keine | keine | keine | keine | keine | keine | keine | Keine |
| Dicke dotiert / mm | nn | nn | Nn | Nn | Nn | 0,3 | Nn | 0,3 |
| Remission dotiert Bei PL 460 nm | | | | | | 24 | | 16 |
| Remission+Transmis sion dotiert /%; Dicke/mm | | | | | | 58+23= 81 | | 78+14 =92 |
| für Vis (380 - 780 nm) | | | | | | | | |
| exclusive PL | | | | | | | | |

Die vorliegende Erfindung wird nachfolgend noch anhand der Figuren 1 bis 5 erläutert.

Zunächst illustriert Figur 1 die Messung der Parameter T_{halb} (oben) und T_{vorwärts} (unten) an einer Probe 2 eines zu Pulver gemahlenen und gesinterten Matrixglases mittels einer Integrationskugel 3.

Die Integrationskugel 3 besitzt einen Durchmesser von 60 mm und eine Kugelöffnung mit einem Durchmesser von etwa 12 bis 15 mm. Eine Rechteckblende (Querschnitt: 6*12 mm²) ist als zusätzliches Bauteil vor der Kugel 3 positioniert. Eine Lichtquelle 1, die im Wesentlichen nur paralleles Licht in Bezug zur die Strahlachse als Messstrahl emittiert, wird in einem Abstand von ca. 50 cm zur Integrationskugel 3 positioniert. Der Messstrahl besitzt einen Querschnitt von 4*10 mm². Eine zu untersuchende Probe 2 wird in verschiedenen Abständen zwischen der Integrationskugel 3 und der Lichtquelle 1 angeordnet. Die Probe 2 besitzt einen Außendurchmeser von größer als etwa 12 mm oder von größer 12 mm mal größer 12 mm (bei einer rechteckigen Probe 2). Die Dicke der Proben liegt bei etwa 1 mm (± 0,05 mm). Ein Spektrometer 4 mit einem Photodetektor zum Nachweis des von Integrationskugel 3 erfassten Lichts ist in Strahlrichtung direkt hinter der Integrationskugel 3 angeordnet.

Bei der Messung von T_{halb} ist die Probe 2 mit einem Abstand von kleiner als oder gleich etwa 3 mm an der Integrationskugel 3 positioniert, um sowohl die direkt transmittierten als auch die in der Probe 2 gestreuten Anteile des von der parallelen Lichtquelle 1 ausgehenden Lichtes zu erfassen.

Demgegenüber wird bei der Messung von T_{vorwärts} die Probe 2 mit Abstand zur Integrationskugel 3 positioniert. Der Abstand beträgt etwa 43 cm. Dadurch wird im Wesentlichen nur der direkt oder nach vorne gerichtete transmittierte Anteil erfasst.

Diese Art der Messung ermöglicht eine Einordnung der hier untersuchten undotierten Proben 2 und/oder gegebenenfalls der dotierten Proben 2 hinsichtlich deren Transmission- und/oder Streuverhaltens. Die Einordnung der Proben 2 bzw. Charakterisierung der Proben 2 kann durch den Quotienten von T_{halb}:T_{vorwärts} ausgedrückt werden.

Für eine ideal optisch transparente, nichtstreuende Probe 2, so dass die Lichtstrahlen ausschließlich in Strahlrichtung verlaufen würden, ergäbe sich für das Verhältnis T_{halb}:T_{vorwärts} ein Wert von 1 oder annähernd 1. Dagegen würde eine Probe mit einem hohen Streuverhalten zu sehr großen Werten für T_{halb}:T_{vorwärts} führen.

Bei der Messung der Transmission wird die Probe 2 somit vor dem, insbesondere an dem, Eingang der Integrationskugel 3 positioniert. Im Gegensatz dazu wird bei der Messung der Remission die Probe 2 hinter, insbesondere an, dem Ausgang der Integrationskugel 3 positioniert. Der Detektor des Spektrometers 4 befindet sich an einem beliebigen Punkt auf dem Umfang der Integrationskugel 3.

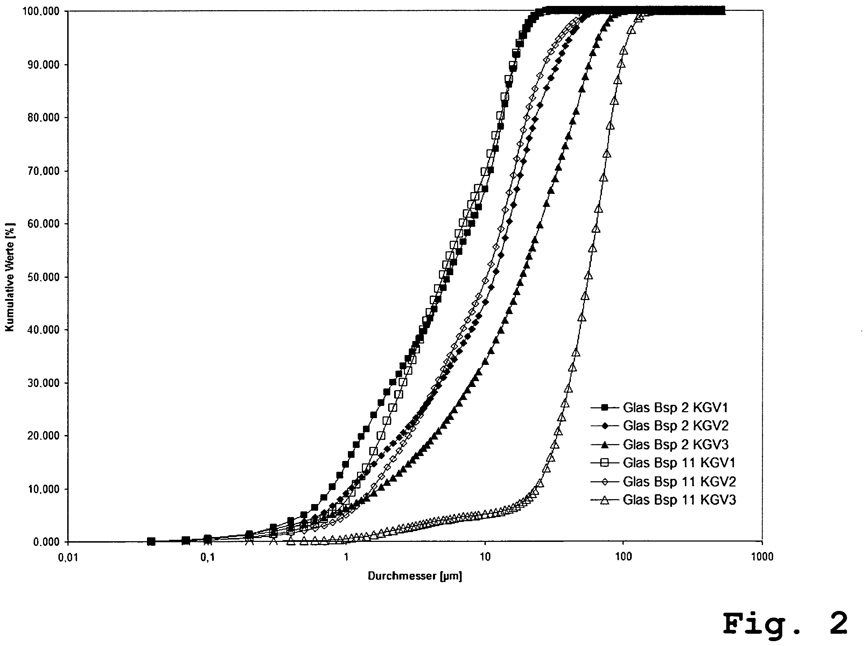

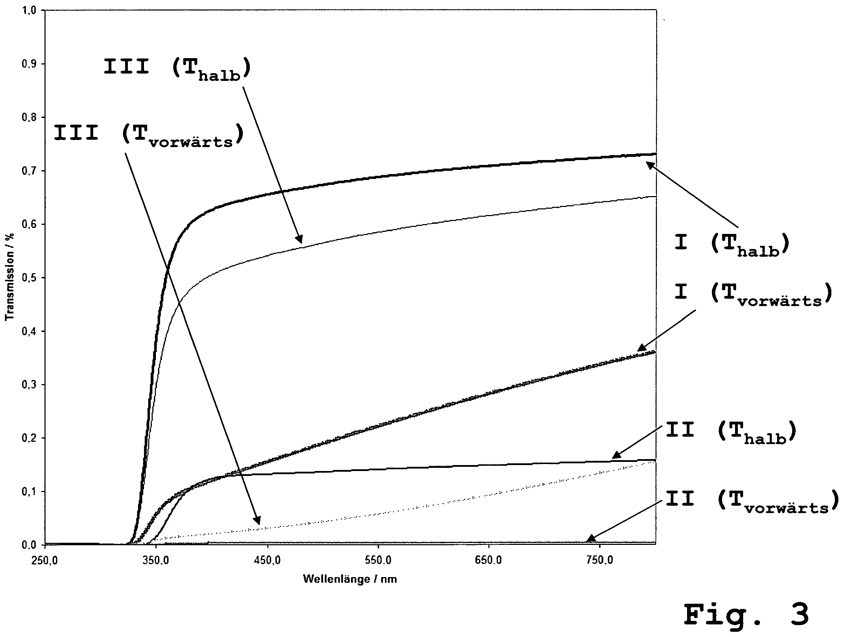

In den Figuren 2 bis 5 sind einige Ergebnisse dargestellt, die zu dem vorstehend genannten Glasbeispiel 2 (siehe Tabellen 2 und 3) und dem vorstehend genannten Glasbeispiel 11 (siehe Tabellen 2 und 3) ermittelt wurden. In Figur 2 sind die erfindungsgemäßen Korngrößenverteilung gezeigt, während die Figuren 3 bis 5 die dazugehörigen Ergebnisse zu T_{halb}:T_{vorwärts} zeigen.

Diese optischen Kenngrößen können bspw. mittels eines handelsüblichen Spektrometers (z.B. Perkin Elmer Lambda 9 oder 900) gemessen werden.

Dazu sind in Figur 2 die kumulativen Werte der Korngrößenverteilung als Funktion des Durchmessers der Körner dargestellt (Messung bspw. mit einem Korngrößenmessgerät Typ Cilas 1064). Im Detail sind jeweils drei unterschiedliche Korngrößenverteilungen (KGV1, KGV2 und KGV3) für die beiden vorstehend genannten Glasbeispiele 2 und 11 dargestellt. Die zur Figur 2 gehörigen "numerischen" Ergebnisse für die Korngrößen bei d10, d50 und d90 sind nachfolgend in der Tabelle 7 zusammengefasst. In der ersten Spalte sind die in der Tabelle 8 verwendeten Bezeichnungen dargestellt.

**Tabelle 7:**

| | | Durchmesser d10 (10.00%) | Durchmesser D50 (50.00%) | Durchmesser d90 (90.00%) |
|---|---|---|---|---|
| II | Glas Bsp 2 KGV 1 | 0,8 | 5,4 | 16, 4 |
| I | Glas Bsp 2 KGV 2 | 1,1 | 11,7 | 33,3 |
| - | Glas Bsp 2 KGV 3 | 1,8 | 18,7 | 56,5 |
| V | Glas Bsp 11 KGV 3 | 23,6 | 55,8 | 94,9 |
| - | Glas Bsp 11 KGV 2 | 1,5 | 10,3 | 27,2 |
| IV | Glas Bsp 11 KGV 1 | 1,2 | 5,0 | 16,1 |

Die Darstellung wird anhand des Beispiels 11 KGV3 (Zeile V) erläutert: 10% der Körner bzw. Teilchen besitzen einen Durchmesser von kleiner als etwa 23,6 µm, 50 % der Teilchen besitzen einen Durchmesser von kleiner als etwa 55,8 µm und 90 % der Teilchen besitzen einen Durchmesser von kleiner als 94,9 µm. Es ist zu erkennen, dass die Teilchen für das Beispiel 11 KGV3 die größten Durchmesser besitzen.

Die zu den Glasbeispielen 2 KGV1 (II), 2 KGV2 (I), 11 KGV1 (IV) 11 KGV3 (V) verwendeten Verfahrensparameter sind in der nachfolgenden Tabelle 8 zusammengefasst. Dabei sind für das Glasbeispiel 2 KGV1 zwei unterschiedliche Verfahren angegeben: (II) mit zweifacher Temperung, d.h. Sintern und anschließende Wärmebehandlung, wie zum Beispiel ein zweites Sintern und (III) mit einfacher Temperung oder Sintern. Der Parameter (t@T/') beschreibt die Haltezeit bei T in Minuten.

**Tabelle 8:**

| | Glas 2 KGV 2 | Glas 2 KGV 1 | Glas 2 KGV 1 | Glas 11 KGV 1 | Glas 11 KGV 3 |
|---|---|---|---|---|---|
| Beispiel | I | II | III | IV | V |
| Dicke / mm | 1,00 | 0,99 | 1,00 | 1,02 | 1,01 |
| T_{halb}: T_{vorwärts} (400 nm; 750nm) | 5,2; 2,2 | 52; 52 | 24,2; 4,8 | 11,6; 3,2 | 1,17; 1,17 |
| Temperung 1 T/°C, t@T/' | 700, 0 | 700, 0 | 700, 0 | 760, 60 | 760, 60 |
| Temperung 2 T/°C, P/bar, t@T/' | 650, 500, 30 | 650, 500, 30 | 0, 0, 0 | 650, 500, 30 | 650, 500, 30 |

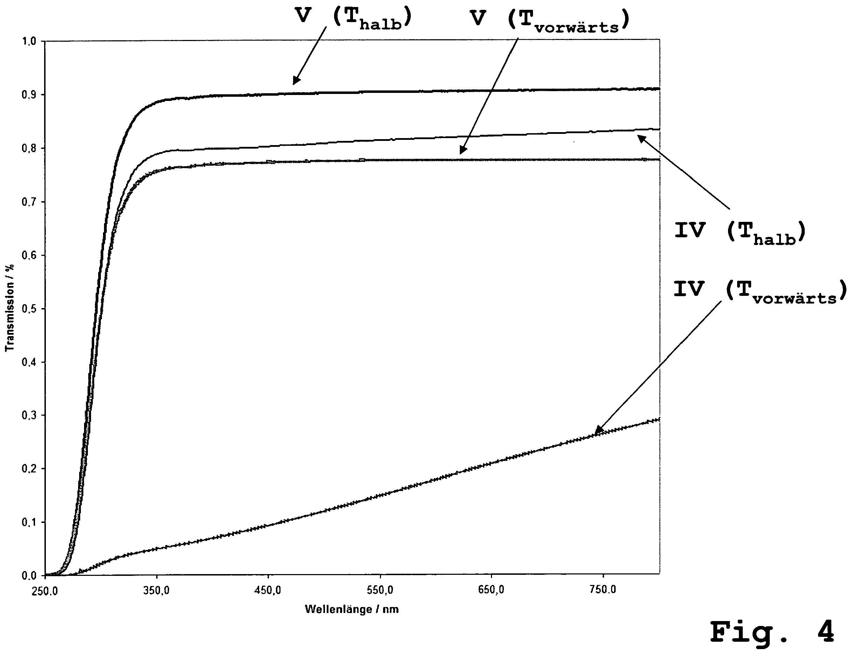

Figur 3 zeigt die Transmission T_{halb} und T_{vorwärts} als Funktion der Lichtwellenlänge für die vorstehend genannten Beispiele I bis III. Figur 4 zeigt die Transmission T_{halb} und T_{vorwärts} als Funktion der Lichtwellenlänge für die Beispiele IV und V. Wenn der Abstand der Kurven T_{halb} und T_{vorwärts}, d.h. die Differenz der Ordinatenwerte, relativ klein ist, so dass die Probe 2 eine geringe Streuung aufweist. Liegen dagegen die Kurven in einem relativ großem Abstand zueinander, weist die Probe 2 eine große Streuung auf. Die Charakterisierung der Proben 2 erfolgt durch den Quotienten von T_{halb} : T_{vorwärts}.

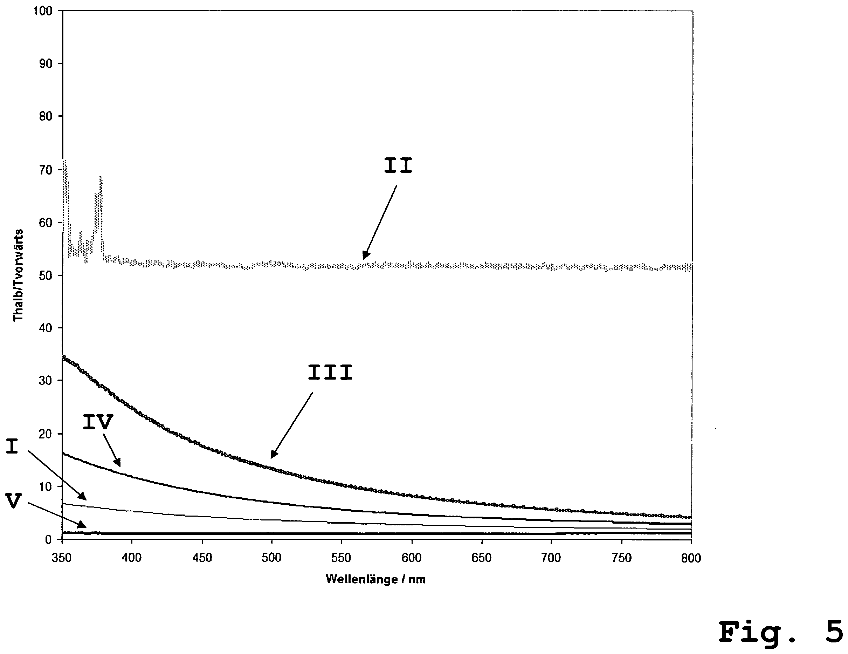

Dazu ist abschließend in der Figur 5 das Verhältnis von T_{halb} über T_{vorwärts} dargestellt. Für alle gezeigten Beispiele I bis V liegen die erzielten Verhältnisse in dem erfindungsgemäß vorteilhaften Bereich. Für das Beispiel V, bei dem die Teilchen den größten Durchmesser besitzen, wird sogar ein Wert T_{halb}:T_{vorwärts} von annähernd 1 erreicht. Der Sinterglasköper weist eine geringe Streuung auf. Ob die Streuung innerhalb der Probe unerwünscht oder sogar erwünscht ist, wird anhand des Konvertersystems, d.h. mit eingebettetem Leuchtstoff, oder des Gesamtsystems Konversions-LED entschieden basierend auf den Anforderungen an diese Systeme. Beispielsweise kann in einem System, in dem die Brechzahlen von Leuchtstoff und Matrixglas nahe beieinander liegen, eine größere Streuung erforderlich sein. Insbesondere ist auch maßgeblich, dass das Kriterium für die Summe aus Transmission und Remission erfüllt ist.

Das vorstehend beschriebene Matrixglas kann zur Realisierung einer Lichtquelle, insbesondere einer weißen oder farbigen Lichtquelle verwendet werden, wobei das Matrixglas mit dem Leuchtstoff oder den Leuchtstoffen einem Konversionsmaterial entspricht, welches vorzugsweise die Merkmale des in einem der Ansprüche von 1 bis 21 definierten Konversionsmaterials umfasst und vorzugsweise mit einem Verfahren mit den Merkmalen eines der Ansprüche von 22 bis 28 hergestellt ist.

Die Lichtquelle umfasst in einer bevorzugten Ausführungsform eine Primärlichtquelle, insbesondere einer Halbleiterlichtquelle als Primärlichtquelle, welche Licht mit Wellenlängen im Bereich von 225 nm bis 520nm, bevorzugt von 350 nm bis 480 nm emittiert, am meisten bevorzugt mit Wellenlängen im Bereich von 400 nm bis 480nm emittiert.

In alternativer Ausgestaltung umfasst die Primärlichtquelle eine LED, welche Licht mit einer Wellenlänge im Bereich von 400nm bis 480nm, bevorzugt 420nm bis 480nm emittiert.

Bei einer weiteren bevorzugten Ausführungsform umfasst die Primärlichtquelle eine UV-LED, welche Licht mit einer Wellenlänge im Bereich von 235 nm bis 400 nm bevorzugt 350 nm bis 400 nm emittiert.

In einer nochmals weiteren Ausgestaltungsform umfasst die Primärlichtquelle eine Halbleiter-Laserdiode, welche Licht mit einer Wellenlänge im Bereich von 400 nm bis 480 nm emittiert.

Die Lichtquelle kann eine oder mehrere, insbesondere auch mehrere verschiedene Primärlichtquellen umfassen.

Weitere Beschreibungen dieser Lichtquellen sowie deren spezieller Ausgestaltung und Eigenschaften finden sich in der Anmeldung mit dem Titel "Optik-Konverter-System für (W)LEDs" mit dem internen Aktenzeichen 08SGL0020DEP bzw. P 3156 und in der Anmeldung mit dem Titel "Gehäuse für LEDs mit hoher Leistung" mit dem internen Aktenzeichen 08SGL0060DEP bwz. P 3063, des gleichen Anmelders, welche am gleichen Tag wie diese Anmeldung eingereicht wurden und vollumfänglich durch Bezugnahme auch zum Inhalt dieser Anmeldung gemacht werden.

Mit mehreren Primärlichtquellen und mehreren Leuchtstoffen kann eine Lichtquelle geschaffen werden, mit welcher Licht an nachfolgenden Farborten im (X, Y) Farbraum, insbesondere durch Auswahl der Primärlichtquelle, durch Auswahl des oder der Leuchtstoffe sowie durch Einstellung der Konzentration der Leuchtstoffe und/oder der Dicke des Konvertermaterials, emittierbar ist,
A=(0.16,0.02)
B=(0.05,0.30)
C=(0.02,0.76)
D=(0.21,0.76)
E=(0.72,0.28).

Hierdurch wird ein Farbraum innerhalb des Polygonzuges ABCDE definiert oder aufgespannt, innerhalb welchem von der Lichtquelle im Wesentlichen Licht aller Farborte emittierbar ist.

Die Einstellung des Farbortes innerhalb des vorstehend erwähnten sowie der nachfolgend aufgeführten Polygonzüge kann einmalig und fest definiert vorgenommen werden, indem das Verhältnis und die Konzentration der jeweiligen Leuchtstoffe sowie bei mehreren Lichtquellen die Intensität der Emission der jeweiligen Primärlichtquelle festgelegt wird.

Ferner kann bei mehreren Primärlichtquellen noch innerhalb eines gewissen Umfangs der Farbort durch Änderung der Intensität der Emission einer oder mehrer Primärlichtquellen verändert werden.

Bei einer weiteren Ausgestaltungsform der Lichtquelle kann Licht an nachfolgenden Farborten im (X, Y) Farbraum, insbesondere durch Auswahl der Primärlichtquelle, durch Auswahl des oder der Leuchtstoffe sowie durch Einstellung der Konzentration der Leuchtstoffe und/oder der Dicke des Konvertermaterials, emittiert werden,
F=(0.28,0.24)
G=(0.37,0.35)
H=(0.37,0.40)
I=(0.24,0.28).

Bei einer nochmals weiteren Ausgestaltungsform der Lichtquelle kann Licht an nachfolgenden Farborten im (X, Y) Farbraum, insbesondere durch Auswahl der Primärlichtquelle, durch Auswahl des oder der Leuchtstoffe sowie durch Einstellung der Konzentration der Leuchtstoffe und/oder der Dicke des Konvertermaterials, emittiert werden,
J=(0.37,0.35)
K=(0.37,0.42)
L=(0.50,0.45)
M=(0.50,0.38).

Bei einer nochmals weiteren Ausgestaltungsform der Lichtquelle kann Licht an nachfolgenden Farborten im (X, Y) Farbraum, insbesondere durch Auswahl der Primärlichtquelle, durch Auswahl des oder der Leuchtstoffe sowie durch Einstellung der Konzentration der Leuchtstoffe und/oder der Dicke des Konvertermaterials, emittiert werden,
N=(0.21,0.76)
O=(0.66,0.34)
P=(0.60,0.34)
Q=(0.15,0.76).

Hierdurch lassen sich insbesondere gesättigte Farben grüngelb-orange(amber) NOPQ darstellen und sind darüber hinaus alle gesättigten Farben im Spektralbereich von 535 nm bis 610 nm durch Auswahl der Primärlichtquelle oder der Primärlichtquellen darstellbar, welche ansonsten mit reinen LEDs nur geringe Effizienzen aufweisen würden.

Zum Verständnis der nachfolgenden Patentansprüche sei angemerkt, dass der Begriff "in dem Spektralbereich, in welchem die Primärlichtquelle Licht emittiert", bei einer ersten Ausführungsform der Erfindung immer nur den Spektralbereich einer einzigen Primärlichtquelle umfasst. Diese einzige Primärlichtquelle ist dabei eine der in der vorstehenden Beschreibung oder in den nachfolgenden Ansprüchen erwähnte Primärlichtquelle.

Bei weiteren erfindungsgemäßen Ausführungsformen umfasst der Begriff "in dem Spektralbereich, in welchem die Primärlichtquelle Licht emittiert", den Spektralbereich von mehr als nur einer einzigen Primärlichtquelle. Es können dabei zwei oder mehr als zwei Primärlichtquellen mit verschiedenen Emissionsspektren verwendet werden, insbesondere um auch größere Farbräume aufspannen zu können. Aber auch diese zwei oder mehreren Primärlichtquellen umfassen jeweils nur die in der vorstehenden Beschreibung oder in den nachfolgenden Ansprüchen erwähnten Primärlichtquellen.

## Patentansprüche

1. Konversionsmaterial zur zumindest teilweisen Umwandlung der Strahlung einer Primärlichtquelle in Licht anderer Wellenlängen, insbesondere für eine, eine Halbleiterlichtquelle als Primärlichtquelle umfassende weiße oder farbige Lichtquelle,
umfassend ein Matrixglas, welches
als Bulkmaterial bei einer Dicke d von etwa 1 mm im Wellenlängenbereich von 350 bis 800 nm und in dem Bereich, in welchem die Primärlichtquelle Licht emittiert, eine Reintransmission τᵢ von mehr als 80% aufweist,
als Sinterkörper, hergestellt aus einem gesinterten Pulver des Matrixglases mit einer Korngrößenverteilung d10 >= 0,7 µm, d50 >= 3µm und d90 <= 150 µm, die an dem Pulver bestimmt wird, aufgebaut ist, und
das Matrixglas aus zumindest einer Komponente der Gruppe umfassend Lanthan-Borosilikat mit Zinkanteil, Aluminium-Borosilikat mit Yttriumanteil und Zinkphosphate besteht.

2. Konversionsmaterial nach Anspruch 1,
wobei für den Sinterkörper ohne einen Leuchtstoff die Summe aus Transmission und Remission im Spektralbereich von 350 nm bis 800 nm und in dem Spektralbereich, in welchem die Primärlichtquelle Licht emittiert, mindestens mehr als 80%, bevorzugt mehr als 85%, am meisten bevorzugt mehr als 90% beträgt und/oder
wobei die Korngrößenverteilung für den Sinterkörper derart gewählt ist, so dass in einem Spektralbereich von 350 bis 800 nm ein Quotient von T_{halb}:T_{vorwärts} zwischen 1 < T_{halb}:T_{vorwärts} <= 70 liegt und/oder
bei welchem im Spektralbereich von 350 bis 800 nm und in dem Bereich, in welchem die Primärlichtquelle Licht emittiert, der sich über diese Spektralbereiche einstellende maximale und minimale Betrag der Differenz von Remission und Transmission sich um nicht mehr als 40% bevorzugt um nicht mehr als 25% sowie am meisten bevorzugt um nicht mehr als 15% unterscheidet.

3. Konversionsmaterial nach einem der vorstehenden Ansprüche, bei welchem die Remission des mit Leuchtstoffen dotierten Matrixglases im gesinterten Zustand im Spektralbereich, in welchem die Primärlichtquelle Licht emittiert, weniger als 30%, bevorzugt weniger als 25 %, meist bevorzugt weniger als 15% beträgt
und
die Summe aus Transmission und Remission des mit Leuchtstoffen dotierten Matrixglases im gesinterten Zustand im Spektralbereich von 350 nm bis 800 nm, außer in dem Spektralbereich, in welchem die Primärlichtquelle Licht emittiert,
mindestens mehr als 80%, bevorzugt mehr als 85%, meist bevorzugt mehr als 90% beträgt.

4. Konversionsmaterial nach einem der vorstehenden Ansprüche, umfassend
zumindest einen Leuchtstoff mit einer Körnung mit einem mittleren Durchmesser d50 zwischen 1 µm und 50 µm, besonders bevorzugt zwischen 1 µm und 20 µm, am meisten bevorzugt zwischen 1 µm und 15 µm und/oder
zumindest einen Leuchtstoff mit einer Körnung mit einem mittleren Durchmesser d50 kleiner 300 nm, besonders bevorzugt kleiner 100 nm und am meisten bevorzugt kleiner 40nm.

5. Konversionsmaterial nach einem der vorstehenden Ansprüche,
bei welchem im Spektralbereich von 350 bis 800 nm jedoch ohne den Bereich, in welchem die Primärlichtquelle Licht emittiert, der sich über diese Spektralbereiche einstellende maximale und minimale Betrag der Differenz von Remission und Transmission um nicht mehr als 40% bevorzugt um nicht mehr als 25% sowie am meisten bevorzugt um nicht mehr als 15% unterscheidet und/oder
bei welchem die interne Konversionsquantenausbeute der in der Glasmatrix eingebetteten Leuchtstoffe gegenüber der internen Konversionsquantenausbeute der nicht eingebetteten Leuchtstoffe um nicht mehr als 20 %, bevorzugt um nicht mehr als 10 % und am meisten bevorzugt um nicht mehr als 5 % vermindert ist.

6. Konversionsmaterial nach einem der vorstehenden Ansprüche, bei welchem das Matrixglas als Bulkmaterial eine Brechzahl von mehr als 1,6 oder von 1,6, bevorzugt mit einem Wert von 1,65 bis 2,0, am meisten bevorzugt mit einem Wert von 1,8 bis 1,95 aufweist und/oder vorzugsweise das Matrixglas eine Zusammensetzung in Gewichtsprozent wie folgt aufweist:
| | | |
|---|---|---|
| SiO₂ | 3 | - 7 |
| B₂O₃ | 16 | - 22 |
| Al₂O₃ | 0 | - 1 |
| ZnO | 3 | - 26 |
| TiO₂ | 1 | - 11 |
| ZrO₂ | 1 | - 8 |
| La₂O₃ | 32 | - 45 |
| Nb₂O₅ | 5 | - 16 |
| WO₃ | 0 | - 7 |
| Y₂O₃ | 0 | - 5 |
| BaO | 0 | - 6 |
| MgO | 0 | - 6 |
| CaO | 0 | - 6 |
| SrO | 0 | - 6 |
| Summe | 0 | - 10 |
| Erdalkalioxide | | |
| Läutermittel | 0 | - 2 |

7. Konversionsmaterial nach einem der Ansprüche von 1 bis 5, bei welchem das Matrixglas als Bulkmaterial eine Brechzahl von weniger als 1,6, bevorzugt einen Wert von 1,43 bis 1,6, am meisten bevorzugt einen Wert von 1,45 bis 1,59 aufweist.

8. Verfahren zur Herstellung eines Konversionsmaterials, insbesondere eines Konversionsmaterials mit den in den Ansprüchen von 1 bis 7 definierten Merkmalen umfassend das
Bereitstellen eines Matrixglaseses mit den in den Ansprüchen 1 bis 7 beschriebenen Eigenschaften,
das Aufmahlen des Matrixglases zu Pulvern, mit einer Korngrößenverteilung von Korngrößen d10 >= 0,7 µm, d50 >= 3 µm und d90 <= 150µm,
das Mischen des pulverisierten Matrixglases mit einem pulverförmig vorliegenden Leuchtstoff,
das Pressen des mit dem pulverförmig vorliegenden Leuchtstoff gemischten pulverisierten Matrixglases,
sowie das Sintern der gepressten, das Matrixglas und den Leuchtstoff enthaltenden Mischung in einer spezifischen Atmosphäre.

9. Verfahren nach Anspruch 8, **gekennzeichnet**
**durch** das Sintern in der spezifischen Atmosphäre, die durch Stickstoff, Formiergas und/oder Argon oder als ein Unterdruck bereitgestellt wird und/oder
**durch** eine thermische Vorbehandlung der Leuchtstoffe, vorzugsweise in einer spezifischen Atmosphäre, welche insbesondere durch Stickstoff, Formiergas und/oder Argon oder als ein Unterdruck bereitgestellt wird und/oder
**durch** ein Drucksintern der gepressten, das Matrixglas und den Leuchtstoff enthaltenden Mischung, wobei vorzugsweise das Drucksintern bei einem Druck in einem Bereich von 100 bis 3000 bar, bevorzugt von 500 bis 2500 bar, besonders bevorzugt von 500 bis 1500 bar durchgeführt wird.

10. Verfahren nach einem der Ansprüche 8 bis 9, **gekennzeichnet**
**durch** ein Ausbilden einer Schutzschicht auf der Oberfläche des Leuchtstoffs vor dem Vermischen mit dem Matrixglas und/oder
**durch** ein Ausbilden einer Schutzschicht auf ein fertig prozessiertes und vorzugsweise nachbearbeitetes Konversionselement wobei vorzugsweise die Schutzschicht mittels nasschemischer Methoden , Sol-Gel-Verfahren, PVD und/oder CVD ausgebildet wird.

11. Verfahren nach einem der Ansprüche 8 bis 10,
bei welchem der Leuchtstoff, beispielsweise Ce:YAG, mit einer Körnung mit einem mittleren Korngrößendurchmesser d50 zwischen 1 µm und 50 µm, besonders bevorzugt zwischen 1 µm und 20 µm, am meisten bevorzugt zwischen 1 µm und 15 µm verwendet wird und/oder
bei welchem der Leuchtstoff mit einer Körnung mit einem mittleren Korngrößendurchmesser d50 kleiner 300 nm, besonders bevorzugt kleiner 100 nm, am meisten bevorzugt kleiner 40 nm verwendet wird.

12. Verfahren nach einem der Ansprüche 8 bis 11,
bei welchem das Sintern eine Erwärmung der gepressten das Matrixglas und den Leuchtstoff enthaltenden Mischung auf eine Zieltemperatur T im Bereich zwischen der Erweichungstemperatur EW und der Verarbeitungstemperatur Va des Matrixglases, bevorzugt auf eine Zieltemperatur in einem Temperaturbereich oberhalb der Erweichungstemperatur bis zu einer Temperatur von etwa 150 K oberhalb der Erweichungstemperatur umfasst und/oder
bei welchem das Sintern bei einer Temperatur durchgeführt wird, so dass die Viskosität des eingesetzten Glases im Bereich zwischen h = 10¹⁴ dPas und h = 10⁶ dPas, bevorzugt zwischen h = 10^{13.5} dPas und h=10⁷ dPas, besonders bevorzugt zwischen h = 10¹⁰ dPas und h=10⁷ dPas liegt.

13. Verfahren nach einem der vorstehenden Ansprüche 8 bis 12, **gekennzeichnet durch** ein weiteres Tempern, nämlich durch eine temperatur- und gegebenenfalls druckgestützte Behandlung, der gesinterten und gepressten das Matrixglas und den Leuchtstoff enthaltenden Mischung, wobei vorzugsweise das weitere Tempern ein zweites Sintern ist, und/oder
das weitere Tempern bei einem Druck in einem Bereich von 250 bis 2500 bar, vorzugsweise von 500 bis 1500 bar, durchgeführt wird und/oder
das weitere Tempern bei einer Temperatur durchgeführt wird, so dass die Viskosität des eingesetzten Glases im Bereich zwischen h = 10¹⁴ dPas und h = 10⁶ dPas, bevorzugt zwischen h = 10^{13.5} dPas und h=10⁷ dPas, besonders bevorzugt zwischen h = 10¹⁰ dPas und h=10⁷ dPas liegt und/oder
das weitere Tempern mit einer Haltezeit im Bereich von 30 bis 600 min, bevorzugt von 60 bis 300 min, besonders bevorzugt von 100 bis 180 min durchgeführt wird.

14. Konversionsmaterial, welches die Merkmale eines der Ansprüche von 1 bis 7 umfasst und mit einem Verfahren mit den Merkmalen eines der Ansprüche von 8 bis 13 hergestellt ist.

15. Lichtquelle, insbesondere weiße oder farbige Lichtquelle, mit
einem Konversionsmaterial, welches die Merkmale des in einem der Ansprüche von 1 bis 7 definierten Konversionsmaterials umfasst und vorzugsweise mit einem Verfahren mit den Merkmalen eines der Ansprüche von 8 bis 13 hergestellt ist, und mit
einer Primärlichtquelle, insbesondere einer Halbleiterlichtquelle als Primärlichtquelle, welche Licht mit Wellenlängen im Bereich von 225 nm bis 520nm, bevorzugt von 350nm bis 480nm emittiert, am meisten bevorzugt mit Wellenlängen im Bereich von 400 nm bis 480nm emittiert.

## Claims

1. A conversion material for at least partially converting the radiation of a primary light source into light of other wavelengths, in particular for a white or coloured light source comprising a semiconductor light source as a primary light source, comprising a matrix glass which
as a bulk material of a thickness d of about 1 mm, exhibits an internal transmittance τᵢ of greater than 80 % in the wavelength range from 350 to 800 nm and in the range in which the primary light source emits light;
is provided in the form of a sintered body made from a sintered powder of the matrix glass with a grain size distribution of d10 ≥ 0.7 µm, d50 ≥ 3 µm, and d90 ≤ 150 µm as determined on the powder; and
wherein the matrix glass consists of at least one member of the group comprising lanthanum borosilicate with a zinc fraction, aluminium borosilicate with an yttrium fraction, and zinc phosphates.

2. The conversion material according to claim 1,
wherein for the sintered body without a luminophore, the sum of transmittance and remission in the spectral range from 350 nm to 800 nm and in the spectral range in which the primary light source emits light is at least greater than 80 %, preferably greater than 85 %, most preferably greater than 90 %; and/or
wherein the grain size distribution for the sintered body is chosen such that in a spectral range from 350 to 800 nm, a quotient T*_{half}* : T*_{forward}* is between 1 < T*_{half}* : T*_{forward}* ≤ 70; and/or
wherein in the spectral range from 350 to 800 nm and in the range in which the primary light source emits light, the maximum and minimum absolute values of the difference between remission and transmittance resulting over these spectral ranges differ by not more than 40 %, preferably by not more than 25 %, and most preferably by not more than 15 %.

3. The conversion material according to any one of the preceding claims, wherein
in the spectral range in which the primary light source emits light, the remission of the matrix glass in the sintered state and doped with luminophores is less than 30 %, preferably less than 25 %, most preferably less than 15 %; and
in the spectral range from 350 nm to 800 nm except for that spectral range in which the primary light source emits light, the sum of transmittance and remission of the matrix glass in the sintered state and doped with luminophores is at least greater than 80 %, preferably greater than 85 %, most preferably greater than 90 %.

4. The conversion material according to any one of the preceding claims, comprising
at least one luminophore with a grain size having a mean diameter d50 between 1 µm and 50 µm, more preferably between 1 µm and 20 µm, most preferably between 1 µm and 15 pm; and/or
at least one luminophore with a grain size having an mean diameter d50 of less than 300 nm, more preferably less than 100 nm, and most preferably less than 40 nm.

5. The conversion material according to any one of the preceding claims,
wherein in the spectral range from 350 to 800 nm but without the range in which the primary light source emits light, the maximum and minimum absolute values of the difference between remission and transmittance resulting over these spectral ranges differ by not more than 40 %, preferably by not more than 25 %, and most preferably by not more than 15 %; and/or
wherein the internal conversion quantum efficiency of the luminophores embedded in the glass matrix is reduced by not more than 20 %, preferably by not more than 10 %, and most preferably by not more than 5 % compared to the internal conversion quantum efficiency of the non-embedded luminophores.

6. The conversion material according to any one of the preceding claims, wherein the matrix glass as a bulk material has a refractive index of more than 1.6 or of 1.6, preferably with a value from 1.65 to 2.0, most preferably with a value from 1.8 to 1.95; and/or wherein preferably the matrix glass has a composition, in percent by weight, as follows:
| | | |
|---|---|---|
| SiO₂ | 3 | - 7 |
| B₂O₃ | 16 | - 22 |
| Al₂O₃ | 0 | - 1 |
| ZnO | 3 | - 26 |
| TiO₂ | 1 | - 11 |
| ZrO₂ | 1 | - 8 |
| La₂O₃ | 32 | - 45 |
| Nb₂O₅ | 5 | - 16 |
| WO₃ | 0 | - 7 |
| Y₂O₃ | 0 | - 5 |
| BaO | 0 | - 6 |
| MgO | 0 | - 6 |
| CaO | 0 | - 6 |
| SrO | 0 | - 6 |
| Total of alkaline earth oxides | 0 | - 10 |
| Refining agents | 0 | - 2 |

7. The conversion material according to any one of claims 1 to 5, wherein the matrix glass as a bulk material has a refractive index of less than 1.6, preferably a value from 1.43 to 1.6, most preferably a value from 1.45 to 1.59.

8. A method for producing a conversion material, in particular a conversion material with the features as defined in claims 1 to 7, comprising:
providing a matrix glass having the properties described in claims 1 to 7;
grinding the matrix glass to obtain powders with a grain size distribution of grain sizes of d10 ≥ 0.7 µm, d50 ≥ 3 µm, and d90 ≤ 150 µm;
mixing the pulverized matrix glass with a luminophore in the form of a powder;
pressing the pulverized matrix glass mixed with the luminophore in the form of a powder;
and sintering the pressed mixture containing the matrix glass and the luminophore in a specific atmosphere.

9. The method according to claim 8, **characterized by**
sintering in the specific atmosphere which is provided by nitrogen, forming gas, and/or argon, or as a negative pressure; and/or
thermally pre-treating the luminophores, preferably in a specific atmosphere which is provided in particular by nitrogen, forming gas, and/or argon, or as a negative pressure; and/or
pressure-assisted sintering the pressed mixture containing the matrix glass and the luminophore, the pressure-assisted sintering being preferably performed at a pressure in a range from 100 to 3000 bar, preferably from 500 to 2500 bar, most preferably from 500 to 1500 bar.

10. The method according to any one of claims 8 to 9, **characterized by**
forming a protective layer on the surface of the luminophore prior to the mixing with the matrix glass; and/or
forming a protective layer on a finally processed and preferably post-processed conversion element, wherein preferably the protective layer is formed by wet-chemical methods, sol-gel processes, PVD, and/or CVD.

11. The method according to any one of claims 8 to 10,
wherein the luminophore, for example Ce:YAG, is used with a grain size with a mean grain size diameter d50 between 1 µm and 50 µm, more preferably between 1 µm and 20 µm, most preferably between 1 µm and 15 µm; and/or
wherein the luminophore is used with a grain size with a mean grain size diameter d50 of less than 300 nm, more preferably less than 100 nm, most preferably less than 40 nm.

12. The method according to any one of claims 8 to 11,
wherein the sintering comprises heating the pressed mixture containing the matrix glass and the luminophore to a target temperature T in a range between the softening temperature EW and the processing temperature Vₐ of the matrix glass, preferably to a target temperature in a temperature range above the softening temperature up to a temperature of approximately 150 K above the softening temperature; and/or
wherein the sintering is performed at a temperature such that the viscosity of the employed glass is in a range between h = 10¹⁴ dPa·s and h = 10⁶ dPa·s, preferably between h = 10^{13.5} dPa·s and h = 10⁷ dPa·s, most preferably between h = 10¹⁰ dPa·s and h = 10⁷ dPa·s.

13. The method according to any one of the preceding claims 8 to 12, **characterized by** a further annealing of the sintered and pressed mixture containing the matrix glass and the luminophore, namely by a heat-assisted and optionally pressure-assisted treatment, wherein
preferably the further annealing is a second sintering; and/or
the further annealing is performed at a pressure in a range from 250 to 2500 bar, preferably from 500 to 1500 bar; and/or
the further annealing is performed at a temperature such that the viscosity of the employed glass is in a range between h = 10¹⁴ dPa·s and h = 10⁶ dPa·s, preferably between h = 10^{13.5} dPa·s and h = 10⁷ dPa·s, most preferably between h = 10¹⁰ dPa·s and h = 10⁷ dPa·s; and/or
the further annealing is performed with a holding time in a range from 30 to 600 min, preferably from 60 to 300 min, most preferably from 100 to 180 min.

14. A conversion material, comprising the features of any one of claims 1 to 7 and produced by a method with the features of any one of claims 8 to 13.

15. A light source, in particular a white or coloured light source, comprising
a conversion material with the features of the conversion material as defined in any one of claims 1 to 7 and preferably produced by a method with the features of any one of claims 8 to 13, and comprising
a primary light source, in particular a semiconductor light source as a primary light source, which emits light having wavelengths in a range from 225 nm to 520 nm, preferably from 350 nm to 480 nm, most preferably with wavelengths in a range from 400 nm to 480 nm.

## Revendications

1. Matériau de conversion pour la transformation au moins partielle du rayon d'une source de lumière primaire en lumière d'autres longueurs d'onde, en particulier pour une source de lumière blanche ou colorée comprenant une source de lumière à semi-conducteur comme source de lumière primaire, comprenant un verre de matrice, qui, sous forme de matériau à l'état massif pour une épaisseur d d'environ 1 mm dans la plage des longueurs d'onde de 350 à 800 nm et dans plage où la source de lumière primaire émet de la lumière, présente un taux de transmission pure τᵢ de plus de 80 %, qui est structuré sous forme de corps fritté, produit à partir d'une poudre frittée du verre de matrice ayant une distribution de tailles de grains d10 ≥ 0,7 µm, d50 ≥ 3 µm et d90 ≤ 150 µm, déterminée sur la poudre, et le verre de matrice étant constitué d'au moins un composant du groupe comprenant du borosilicate de lanthane avec une proportion de zinc, du borosilicate d'aluminium avec une proportion d'yttrium et des phosphates de zinc.

2. Matériau de conversion selon la revendication 1,
dans lequel, pour le corps fritté dépourvu de substance luminescente, la somme de la transmission et de la rémission dans la plage spectrale de 350 nm à 800 nm et dans la plage spectrale, où la source de lumière primaire émet de la lumière, est supérieure à au moins 80 %, de préférence supérieure à 85 %, de manière la plus préférée supérieure à 90 %, et/ou
dans lequel la distribution des tailles de grains pour le corps fritté est choisie de sorte que, dans une plage spectrale de 350 à 800 nm, un quotient de T_{halb}:T_{vorwärts} soit compris entre 1 < T_{halb}:T_{vorwärts} <=70 et/ou
dans lequel, dans la plage spectrale de 350 à 800 nm et dans la plage où la source de lumière primaire émet de la lumière, la valeur maximale et minimale de la différence entre rémission et transmission, s'ajustant sur ces plages spectrales, présente une différence de pas plus de 40 %, de préférence de pas plus de 25 % ainsi que de manière la plus préférée de pas plus de 15 %.

3. Matériau de conversion selon l'une des revendications précédentes, dans lequel la rémission du verre de matrice dopé avec des substances luminescentes à l'état fritté est inférieure à 30 %, de préférence inférieure à 25 %, de manière la plus préférée inférieure à 15 %, dans la plage spectrale où la source de lumière primaire émet de la lumière, et la somme de la transmission et de la rémission du verre de matrice dopé avec des substances luminescentes à l'état fritté dans la plage spectrale de 350 nm à 800 nm, hormis dans la plage spectrale où la source de lumière primaire émet de la lumière, est au moins supérieure à 80 %, de préférence supérieure à 85 %, de manière la plus préférée supérieure à 90 %.

4. Matériau de conversion selon l'une des revendications précédentes, comprenant :
au moins une substance luminescente ayant une granulométrie de diamètre moyen d50 compris entre 1 µm et 50 µm, de manière particulièrement préférée entre 1 µm et 20 µm, de manière la plus préférée compris entre 1 µm et 15 µm et/ou
au moins une substance luminescente ayant une granulométrie de diamètre moyen d50 inférieur à 300 nm, de manière particulièrement préférée inférieur à 100 nm et de manière la plus préférée inférieur à 40 nm.

5. Matériau de conversion selon l'une des revendications précédentes,
dans lequel, dans la plage spectrale de 350 à 800 nm, néanmoins sans la plage où la source de lumière primaire émet de la lumière, la valeur maximale et minimale de la différence entre rémission et transmission, s'ajustant sur ces plages spectrales, présente une différence de pas plus de 40 %, de préférence de pas plus de 25 % ainsi que de manière la plus préférée de pas plus de 15 %, et/ou
dans lequel le rendement quantique de conversion interne des substances luminescentes incorporées dans la matrice de verre par rapport au rendement quantique de conversion interne des substances luminescentes non incorporées est réduit de pas plus de 20 %, de préférence de pas plus de 10 % et de manière la plus préférée de pas plus de 5 %.

6. Matériau de conversion selon l'une des revendications précédentes, dans lequel le verre de matrice sous forme de matériau à l'état massef présente un indice de réfraction supérieur à 1,6 ou de 1,6, de préférence avec une valeur de 1,65 à 2,0, de manière plus préférée avec une valeur de 1,8 à 1,95 et/ou de préférence le verre de matrice présente une composition en pourcent en poids comme suit :
| | |
|---|---|
| SiO₂ | 3 - 7 |
| B₂O₃ | 16 - 22 |
| Al₂O₃ | 0 - 1 |
| ZnO | 3 - 26 |
| TiO₂ | 1 - 11 |
| ZrO₂ | 1 - 8 |
| La₂O₃ | 32 - 45 |
| Nb₂O₅ | 5 - 16 |
| WO₃ | 0 - 7 |
| Y₂O₃ | 0 - 5 |
| BaO | 0 - 6 |
| MgO | 0 - 6 |
| CaO | 0 - 6 |
| SrO | 0 - 6 |
| Somme | 0 - 10 |
| oxydes alcalino-terreux | |
| Agent d'affinage | 0 - 2 |

7. Matériau de conversion selon l'une des revendications 1 à 5, dans lequel le verre de matrice sous forme de matériau à l'état massif présente un indice de réfraction inférieur à 1,6, de préférence une valeur de 1,43 à 1,6, de manière plus préférée une valeur de 1,45 à 1,59.

8. Procédé de production d'un matériau de conversion, en particulier d'un matériau de conversion ayant les caractéristiques définies dans les revendications 1 à 7, comprenant :
la mise à disposition d'un verre de matrice ayant les qualités décrites dans les revendications 1 à 7,
le broyage du verre de matrice en poudres ayant une distribution des tailles de grain d10 ≥ 0,7 µm, d50 ≥ 3 µm et d90 ≤ 150 µm,
le mélange du verre de matrice pulvérisé avec une substance luminescente se présentant sous forme pulvérulente,
la pression du verre de matrice pulvérisé mélangé avec la présente substance luminescente se présentant sous forme pulvérulente,
et le frittage du mélange pressé, contenant le verre de matrice et la substance luminescente dans une atmosphère spécifique.

9. Procédé selon la revendication 8, **caractérisé par** :
le frittage dans l'atmosphère spécifique, qui est mise à disposition par l'azote, un gaz de formage et/ou l'argon ou sous forme de dépression et/ou
par un prétraitement thermique des substances luminescentes, de préférence dans une atmosphère spécifique, qui est mise à disposition par l'azote, un gaz de formage et/ou l'argon ou sous forme de dépression et/ou
par un frittage sous pression du mélange pressé, contenant le verre de matrice et la substance luminescente, où de préférence le frittage sous pression est réalisé sous une pression dans une plage de 100 à 3 000 bar, de préférence 500 à 2 500 bar, de manière particulièrement préférée de 500 à 1 500 bar.

10. Procédé selon l'une des revendications 8 à 9, **caractérisé :**
**par** une formation d'une couche protectrice sur la surface de la substance luminescente avant le mélange avec le verre de matrice et/ou
par une formation d'une couche protectrice sur un élément de conversion dont le traitement a été terminé et de préférence usiné ultérieurement, où de préférence la couche protectrice est formée au moyen de méthodes chimiques par voie humide, procédé sol-gel, PVD et/ou CVD.

11. Procédé selon l'une des revendications 8 à 10, selon lequel on utilise la substance luminescente, par exemple Ce:YAG, ayant une granulométrie de diamètre moyen de tailles de grains d50 compris entre 1 µm et 50 µm, de manière particulièrement préférée entre 1 µm et 20 µm, de manière la plus préférée compris entre 1 µm et 15 µm et/ou
selon lequel on utilise la substance luminescente ayant une granulométrie de diamètre moyen de tailles de grains d50 inférieur à 300 nm, de manière particulièrement préférée inférieur à 100 nm, de manière la plus préférée inférieur à 40 nm.

12. Procédé selon l'une des revendications 8 à 11, selon lequel le frittage comprend un chauffage du mélange pressé contenant le verre de matrice et la substance luminescente à une température cible T dans la plage entre la température de ramollissement EW et la température de transformation Va du verre de matrice, de préférence à une température cible dans une plage de température supérieure à la température de ramollissement jusqu'à une température d'environ 150 K au-delà de la température de ramollissement et/ou
selon lequel le frittage est réalisé à une température de telle sorte que la viscosité du verre mis en oeuvre réside dans la plage entre h = 10¹⁴ dPas et h = 10⁶ dPas, de préférence entre h = 10^{13,5} dPas et h = 10⁷ dPas, de manière particulièrement préférée entre h = 10¹⁰ dPas et h = 10⁷ dPas.

13. Procédé selon l'une des revendications précédentes 8 à 12, **caractérisé par** une autre trempe, notamment par un traitement assisté en température et le cas échéant en pression, du mélange pressé contenant le verre de matrice et la substance luminescente, où l'autre trempe est de préférence un deuxième frittage, et/ou
l'autre trempe est réalisée à une pression comprise dans une plage de 250 à 2 500 bar, de préférence de 500 à 1 500 bar, et/ou
l'autre trempe est réalisée à une température de telle sorte que la viscosité du verre mis en oeuvre réside dans la plage entre h = 10¹⁴ dPas et h = 10⁶ dPas, de préférence entre h = 10^{13,5} dPas et h = 10⁷ dPas, de manière particulièrement préférée entre h = 10¹⁰ dPas et h = 10⁷ dPas, et/ou
l'autre trempe est réalisée avec un temps de maintien dans la plage de 30 à 600 min, de préférence de 60 à 300 min, de manière particulièrement préférée de 100 à 180 min.

14. Matériau de conversion, qui comprend les caractéristiques d'une des revendications 1 à 7 et est produit avec un procédé comportant les caractéristiques d'une des revendications 8 à 13.

15. Source de lumière, en particulier source de lumière blanche ou colorée, pourvue :
d'un matériau de conversion, qui comprend les caractéristiques du matériau de conversion défini dans l'une des revendications 1 à 7 et produit de préférence avec un procédé ayant les caractéristiques d'une des revendications 8 à 13, et pourvue
d'une source de lumière primaire, notamment d'une source de lumière à semi-conducteur comme source de lumière primaire, qui émet de la lumière à des longueurs d'ondes dans la plage de 225 nm à 520 nm, de préférence de 350 nm à 480 nm, de manière la plus préférée à des longueurs d'ondes comprises dans la plage de 400 nm à 480 nm.
